(19) **Europäisches Patentamt / European Patent Office / Office européen des brevets**

(11) **EP 4 529 233 A1**

(12) **EUROPEAN PATENT APPLICATION**
published in accordance with Art. 153(4) EPC

(43) Date of publication:
26.03.2025 Bulletin 2025/13

(21) Application number: 23814928.0

(22) Date of filing: 12.05.2023

(51) International Patent Classification (IPC):
*H04W 4/02* (2018.01)

(52) Cooperative Patent Classification (CPC):
H04W 4/02; H04W 24/02; H04W 24/08;
H04W 64/00

(86) International application number:
PCT/CN2023/093756

(87) International publication number:
WO 2023/231743 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.06.2022 CN 202210625704

(71) Applicant: Huawei Technologies Co., Ltd.
Shenzhen, Guangdong 518129 (CN)

(72) Inventors:
• LIU, Mengting
  Shenzhen, Guangdong 518129 (CN)
• GAO, Xin
  Shenzhen, Guangdong 518129 (CN)
• SHA, Tong
  Shenzhen, Guangdong 518129 (CN)
• LEI, Zhendong
  Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **COMMUNICATION METHOD, AND APPARATUS**

(57) A communication method and apparatus are provided. The method includes: A first device receives first information, where the first information includes phase information of a second device on M resources, and the M resources are frequency resources. The first device receives a first signal from the second device on one or more of the M resources. The first device obtains measurement information, where the measurement information is determined based on the first signal and the first information. In embodiments of this application, after receiving signals on the one or more of the M resources, the first device may determine phase information between the received signals based on the first information, so that the phase information between the received signals may be considered when the measurement information is obtained. This reduces interference caused by a difference between phases of different signals, to improve accuracy of the obtained measurement information.

FIG. 4

EP 4 529 233 A1

**Description**

**CROSS-REFERENCE TO RELATED APPLICATIONS**

This application claims priority to Chinese Patent Application No. 202210625704.2, filed with the China National Intellectual Property Administration on June 2, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

With development of the internet of things, as data and intelligence are increasingly involved in the definition of future industries, precise location services play an irreplaceable role in the development of the internet of things, and the industry has increasingly high requirements for high-precision positioning. An industrial-grade precision industry, automated guided vehicle (automated guided vehicle, AGV) navigation, self-driving, and other scenarios have high-precision positioning requirements. Therefore, how to implement the high-precision positioning is an important problem that needs to be resolved at a current stage.

Positioning precision depends on a bandwidth of a positioning signal to a large extent. A higher bandwidth indicates higher positioning precision. However, spectrums of most operators are "discretized" or "fragmented", and it is difficult to obtain a segment of a high-bandwidth spectrum. Currently, a carrier aggregation (carrier aggregation, CA) technology may be used to send or receive signals on a plurality of aggregated carriers. A receive end may perform corresponding measurement based on the signals on the plurality of carriers, to obtain better positioning performance.

However, a problem of phase discontinuity may exist between signals sent on different carriers. In this case, a large error may be caused to a measurement result, and positioning performance is further affected.

**SUMMARY**

Embodiments of this application provide a communication method and apparatus, to reduce an error caused by discontinuity of phases of signals.

According to a first aspect, a first communication method is provided. The method may be performed by a first device, may be performed by another device including a function of a first device, or may be performed by a chip system or another functional module. The chip system or the functional module can implement the function of the first device. For example, the chip system or the functional module is disposed in the first device. The method includes: receiving first information, where the first information includes information about a second device on M resources, the M resources are frequency resources, and M is a positive integer; receiving a first signal from the second device on one or more of the M resources; and obtaining measurement information, where the measurement information is determined based on the first signal and the first information.

In an optional implementation, the information about the second device on the M resources includes phase information of the second device on the M resources, and/or capability information of the second device on the M resources.

In embodiments of this application, after receiving signals on the one or more of the M resources, the first device may determine phase information between the received signals based on the first information, so that the phase information between the received signals may be considered when the measurement information is obtained. This reduces a measurement error caused by a difference between phases of different signals, and improves accuracy of the obtained measurement information.

Because the first information may include the phase information of the second device on the M resources, and/or include the capability information of the second device on the M resources, the following provides descriptions in two parts.

    1. The first information includes the phase information of the second device on the M resources.

In an optional implementation, a first resource in the M resources belongs to a first resource combination, and the first information includes phase information of the second device on the first resource in the first resource combination.

In an optional implementation, the phase information of the second device on the first resource in the first resource combination includes one or more of the following: a phase of the second device on the first resource in the first resource combination; a quantity of phases of the second device on the first resource in the first resource combination; a phase value set of the second device on the first resource in the first resource combination; a phase value range of the second device on the first resource in the first resource combination; phase error information of the second device on the first resource in the first resource combination; a difference between a phase of the second device on a second resource and a phase of the second device on the first resource in the first resource combination, where the second resource is any resource other than the first resource in the M first resources; or a difference between a reference phase and a phase of the second device on the first resource in the first resource combination.

In an optional implementation, the difference between the phase of the second device on the second resource and the phase of the second device on the first resource in the first resource combination is not 0. In this manner, the first information received by the first device may include a phase difference that is not 0. In other words, the phase information in the first information is phase information of a resource that has a phase difference from the first resource. If finding that the first information does not include a difference between phases of some resources, the first device may determine that the difference between the phases of these resources is 0. In this way, the first device can obtain the difference between the phases of the resources, and a capacity of the first information can be reduced, thereby reducing signaling overheads.

In an optional implementation, the second resource belongs to a second resource combination, and the second resource combination and the first resource combination are a same resource combination, or the second resource combination and the first resource combination are different resource combinations.

In an optional implementation, the first resource combination is one or more frequency band combinations.

In an optional implementation, the first resource is one or more frequency bands or one or more carriers.

In an optional implementation, the M resources are in one-to-one correspondence with M paths. In this manner, for the M resources, when the second device sends a signal on one of the M resources, a same path is used; or when the second device sends signals on different resources in the M resources, different paths are used.

In an optional implementation, a first resource in the M resources is a resource set, and the M resources are M resource sets.

In this manner, the first information may include phase information of the second device on at least one of the M resource sets, and the phase information corresponding to the second device may be reported at a granularity of the resource set. In this way, complete content can be reported. This also helps reduce signaling overheads.

In an optional implementation, the resource set is a carrier set, the M resource sets are M carrier sets, and a first resource set is a first carrier set.

In an optional implementation, a first resource is a frequency band combination, and the M resources are M frequency band combinations; a first resource is a frequency band, and the M resources are M frequency bands; or a first resource is a carrier, and the M resources are M carriers. Based on the foregoing manner, in some scenarios, the second device uses a same path on one frequency band combination; the second device uses a same path on a frequency band regardless of a frequency band combination to which the frequency band belongs; or the second device uses a same path on a carrier regardless of a frequency band combination to which the carrier belongs. In this case, it may be considered that this implementation is used for the first information. This implementation is simple, and transmission overheads caused by the first information can be reduced.

In an optional implementation, the measurement information is used for positioning, for example, may be used to position the second device.

In an optional implementation, the first information is carried in the capability information. For example, the first information is carried in a capability information message of the second device.

2. The first information includes the capability information of the second device on the M resources. For example, the capability information that is of the second device on the M resources and that is included in the first information may be phase-related capability information of the second device on the M resources.

In an optional implementation, a first resource in the M resources belongs to a first resource combination, and the capability information includes capability information of the second device on the first resource in the first resource combination.

In an optional implementation, the capability information of the second device on the first resource in the first resource combination includes one or more of the following: a quantity of resource elements corresponding to the first resource in the first resource combination; a frequency domain range of the first resource in the first resource combination; or a frequency division coefficient corresponding to the second device on the first resource in the first resource combination.

In an optional implementation, the first resource in the first resource combination corresponds to one or more resource elements, the resource element is in one-to-one correspondence with a path, and the second device corresponds to one or more paths on the first resource in the first resource combination. In this manner, the quantity of resource elements corresponding to the first resource in the first resource combination is used to reflect a quantity of paths used by the second device on the first resource in the first resource combination. Therefore, the first device may determine, based on this, a difference between phases of signals sent by the second device on the first resource in the first resource combination. The first device can determine, based on the quantity of paths, a phase of the second device when the second device sends a signal on the first resource in the first resource combination.

In an optional implementation, the frequency range of the first resource in the first resource combination includes a frequency range of each path used by the second device for sending the signal on the first resource in the first resource combination. In this manner, the first device can determine, based on the frequency range, the difference between the phases of the signals sent by the second device on the first resource in the first resource combination.

In an optional implementation, the frequency division coefficient corresponding to the second device on the first resource in the first resource combination includes a frequency division coefficient of each path used by the second device for sending the signal on the first resource in the first resource combination. In this manner, if learning of a frequency division coefficient of a path, the first device can determine a phase value set, a phase value range, or a phase of a signal sent by the second device on the path, so that the first device can determine the phase of the signal sent by the second device on the path.

In an optional implementation, the first resource is one or more frequency bands or one or more carriers.

In an optional implementation, the first resource combination is one or more frequency band combinations.

In an optional implementation, the M resources are in one-to-one correspondence with M paths.

In an optional implementation, a first resource in the M resources is a resource set, and the M resources are M resource sets.

In an optional implementation, the resource set is a carrier set, the M resource sets are M carrier sets, and a first resource set is a first carrier set.

In an optional implementation, a first resource is a frequency band combination, and the M resources are M frequency band combinations; a first resource is a frequency band, and the M resources are M frequency bands; or a first resource is a carrier, and the M resources are M carriers.

In an optional implementation, the measurement information is used for positioning.

In an optional implementation, the first information is carried in the capability information.

For technical effects of the optional implementations included in point 2 of the first aspect, refer to descriptions of technical effects of the corresponding implementations in point 1 of the first aspect.

According to a second aspect, a second communication method is provided. The method may be performed by a third device, may be performed by another device including a function of a third device, or may be performed by a chip system or another functional module. The chip system or the functional module can implement the function of the third device. For example, the chip system or the functional module is disposed in the third device. The method includes: obtaining first information, where the first information includes information about a second device on M resources, the M resources are frequency resources, and M is a positive integer; and sending the first information.

In an optional implementation, the information about the second device on the M resources includes phase information of the second device on the M resources, and/or capability information of the second device on the M resources.

Because the first information may include the phase information of the second device on the M resources, and/or include the capability information of the second device on the M resources, the following also provides descriptions in two parts.

1. The first information includes the phase information of the second device on the M resources.

In an optional implementation, a first resource in the M resources belongs to a first resource combination, and the first information includes phase information of the second device on the first resource in the first resource combination.

In an optional implementation, the phase information of the second device on the first resource in the first resource combination includes one or more of the following: a phase of the second device on the first resource in the first resource combination; a quantity of phases of the second device on the first resource in the first resource combination; a phase value set or a phase value range of the second device on the first resource in the first resource combination; phase error information of the second device on the first resource in the first resource combination; a difference between a phase of the second device on a second resource and a phase of the second device on the first resource in the first resource combination, where the second resource is any resource other than the first resource in the M resources; or a difference between a reference phase and a phase corresponding to the second device on the first resource in the first resource combination.

In an optional implementation, the difference between the phase of the second device on the second resource and the phase of the second device on the first resource in the first resource combination is not 0.

In an optional implementation, the second resource belongs to a second resource combination, and the second resource combination and the first resource combination are a same resource combination, or the second resource combination and the first resource combination are different resource combinations.

In an optional implementation, the first resource combination is one or more frequency band combinations.

In an optional implementation, the first resource is one or more frequency bands or one or more carriers.

In an optional implementation, the M resources are in one-to-one correspondence with M paths.

In an optional implementation, a first resource is a frequency band combination, and the M resources are M frequency band combinations; a first resource is a frequency band, and the M resources are M frequency bands; or a first resource is a carrier, and the M resources are M carriers.

In an optional implementation, a first resource in the M resources is a resource set, and the M resources are M resource sets.

In an optional implementation, the resource set is a carrier set, the M resource sets are M carrier sets, and a first resource set is a first carrier set.

In an optional implementation, the method further includes: sending a first signal on one or more of the M resources.

In an optional implementation, the first signal is used for positioning.

In an optional implementation, the sending the first information includes: sending capability information of the second device, where the capability information of the second device includes the first information. In this case, the third device and the second device may be a same device. For example, the capability information of the second device is a UE capability information message.

2. The first information includes the capability information of the second device on the M resources.

In an optional implementation, a first resource in the M resources belongs to a first resource combination, and the first information includes capability information of the second device on the first resource in the first resource combination.

In an optional implementation, the capability information of the second device on the first resource in the first resource combination includes one or more of the following: a quantity of resource elements corresponding to the first resource in the first resource combination; a frequency range of the first resource in the first resource combination; or a frequency division coefficient corresponding to the second device on the first resource in the first resource combination.

In an optional implementation, the first resource in the first resource combination corresponds to one or more resource elements, the resource element is in one-to-one correspondence with a path, and the second device corresponds to one or more paths on the first resource in the first resource combination. In this manner, the quantity of resource elements corresponding to the first resource in the first resource combination is used to reflect a quantity of paths used by the second device on the first resource in the first resource combination. Therefore, a first device may determine, based on this, a difference between phases of signals sent by the second device on the first resource in the first resource combination. The first device can determine, based on the quantity of paths, a phase of the second device when the second device sends a signal on the first resource in the first resource combination.

In an optional implementation, the frequency range of the first resource in the first resource combination includes a frequency range of each path used by the second device for sending the signal on the first resource in the first resource combination. In this manner, the first device can determine, based on the frequency range, the difference between the phases of the signals sent by the second device on the first resource in the first resource combination.

In an optional implementation, the frequency division coefficient corresponding to the second device on the first resource in the first resource combination includes a frequency division coefficient of each path used by the second device for sending the signal on the first resource in the first resource combination. In this manner, if learning of a frequency division coefficient of a path, the first device can determine a phase value set, a phase value range, or a phase of a signal sent by the second device on the path, so that the first device can determine the phase of the signal sent by the second device on the path.

In an optional implementation, the first resource is one or more frequency bands or one or more carriers.

In an optional implementation, the first resource combination is one or more frequency band combinations.

A first resource in the M resources is a resource set, and the M resources are M resource sets.

In an optional implementation, the resource set is a carrier set, the M resource sets are M carrier sets, and the first resource is a first resource set.

In an optional implementation, a first resource in the M first resources is a frequency band combination, and the M resources are M frequency band combinations; a first resource is a frequency band, and the M resources are M frequency bands; or a first resource is a carrier, and the M resources are M carriers.

In an optional implementation, the method further includes: sending a first signal on one or more of the M resources.

In an optional implementation, the first signal is used for positioning.

For technical effects of the optional implementations included in point 2 of the second aspect, refer to one or more of the following: descriptions of technical effects of the corresponding implementations in point 1 of the first aspect, descriptions of technical effects of the corresponding implementations in point 2 of the first aspect, or descriptions of technical effects of the corresponding implementations in point 1 of the second aspect are described.

According to a third aspect, a communication apparatus is provided. The communication apparatus may be the first device in the first aspect and/or the second aspect, a large device including the first device, or a functional module in the first device, for example, a baseband apparatus or a chip system. The communication apparatus includes a processing unit (also referred to as a processing module sometimes) and a transceiver unit. The transceiver unit (or a receiving unit) is configured to receive first information, where the first information includes information about a second device on M resources, the M resources are frequency resources, and M is a positive integer. The transceiver unit (or the receiving unit) is further configured to receive a first signal from the second device on one or more of the M resources. The processing unit is configured to obtain measurement information, where the measurement information is determined based on the first signal and the first information.

In an optional implementation, the communication apparatus further includes a storage unit (also referred to as a storage module sometimes), and the processing unit is configured to: be coupled to the storage unit, and execute a program or instructions in the storage unit, to enable the communication apparatus to perform a function of the first device in the first aspect and/or the second aspect.

According to a fourth aspect, another communication apparatus is provided. The communication apparatus may be the third device in the first aspect and/or the second aspect, a large device including the third device, or a functional module in the third device, for example, a baseband apparatus or a chip system. The communication apparatus includes a processing unit (also referred to as a processing module sometimes) and a transceiver unit (also referred to as a transceiver module sometimes). The processing unit is configured to obtain first information, where the first information includes information about a second device on M resources, the M resources are frequency resources, and M is a positive integer. The transceiver unit (or a sending unit) is configured to send the first information.

In an optional implementation, the communication apparatus further includes a storage unit (also referred to as a storage module sometimes), and the processing unit is configured to: be coupled to the storage unit, and execute a program or instructions in the storage unit, to enable the communication apparatus to perform a function of the third device in the first aspect and/or the second aspect.

According to a fifth aspect, a communication system is provided, including the communication apparatus according to the third aspect and the communication apparatus according to the fourth aspect.

According to a sixth aspect, a computer-readable storage medium is provided. The computer-readable storage medium is configured to store a computer program or instructions. When the computer program or the instructions are run, the method performed by the first device or the third device in the foregoing aspects is implemented.

According to a seventh aspect, a computer program product including instructions is provided. When the computer program product runs on a computer, the method in the foregoing aspects is implemented.

According to an eighth aspect, a chip system is provided, including a processor and an interface. The processor is configured to: invoke instructions from the interface and run the instructions, to enable the chip system to implement the method in the foregoing aspects.

## BRIEF DESCRIPTION OF DRAWINGS

FIG. 1 is a diagram of a carrier aggregation technology;
FIG. 2 is a diagram of a capability parameter;
FIG. 3 is a diagram of an application scenario according to an embodiment of this application;
FIG. 4 is a flowchart of a first communication method according to an embodiment of this application;
FIG. 5 is a diagram of sending a signal according to an embodiment of this application;
FIG. 6 is a flowchart of a second communication method according to an embodiment of this application;
FIG. 7 is a diagram of a positioning process according to an embodiment of this application;
FIG. 8 is a flowchart of a positioning process according to an embodiment of this application;
FIG. 9 is a diagram of an apparatus according to an embodiment of this application; and
FIG. 10 is a diagram of another apparatus according to an embodiment of this application.

## DESCRIPTION OF EMBODIMENTS

To make objectives, technical solutions, and advantages of embodiments of this application clearer, the following further describes embodiments of this application in detail with reference to the accompanying drawings.

The following describes some terms or concepts in embodiments of this application, to facilitate understanding of a person skilled in the art.

(1) Carrier aggregation

In a carrier aggregation technology, component carriers (component carriers, CCs) on an available band are combined, to achieve effects of improving spectral efficiency, increasing a data rate, and improving network performance. For example, two component carriers participate in aggregation. The carrier aggregation may include several types, which are described below by using examples.

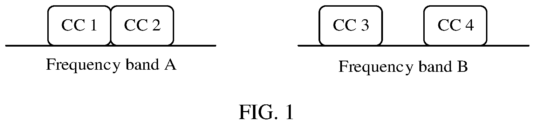

If the two CCs belong to a same frequency band and are contiguous in frequency domain, aggregation of the two component carriers is referred to as intra-frequency band contiguous carrier aggregation (intra-band contiguous CA). For example, a CC 1 and a CC 2 on a frequency band A are aggregated in FIG. 1. It should be noted that, in some scenarios, if the two CCs belong to the same frequency band, and a guard bandwidth exists between the two CCs, because the guard bandwidth occupies a small spectrum, it may also be considered that the two CCs are contiguous.

If the two component carriers belong to the same frequency band but are non-contiguous in frequency domain, aggregation of the two component carriers is referred to as intra-frequency band non-contiguous carrier aggregation (intra-band non-contiguous CA). For example, a CC 3 and a CC 4 on a frequency band B are aggregated in FIG. 1.

If the two component carriers belong to different frequency bands, aggregation of the two component carriers is referred to as inter-frequency band carrier aggregation or intra-frequency band carrier aggregation (intra-band CA). For example, the CC 1 on the frequency band A and the CC 3 on the frequency band B are aggregated in FIG. 1.

(2) Band combination (band combination, BC)

One BC may include one or more frequency bands. Because one frequency band may include one or more carriers, it may also be understood that one BC may include one or more carriers.

Each BC corresponds to one feature set combination (FeatureSetsCombination, FSC), and each band (band) in one band combination corresponds to one feature set of the band (FeatureSetperBand). For example, the feature set of the band includes an uplink feature set (FeatureSetUplink) and a downlink feature set (FeatureSetDownlink). Each carrier corresponds to one carrier feature set (FeatureSetPerCC). For example, the carrier feature set includes an uplink carrier feature set (FeatureSetDownlinkPerCC), and a downlink carrier feature set (FeatureSetDownlinkPerCC). A UE may report a capability of the UE by using a feature set, for example, report one or more of the following: a capability of a band combination, a capability of each band in a band combination, or a capability of each carrier in a band combination. Optionally, each feature set may be represented by using an identifier (identifier, ID).

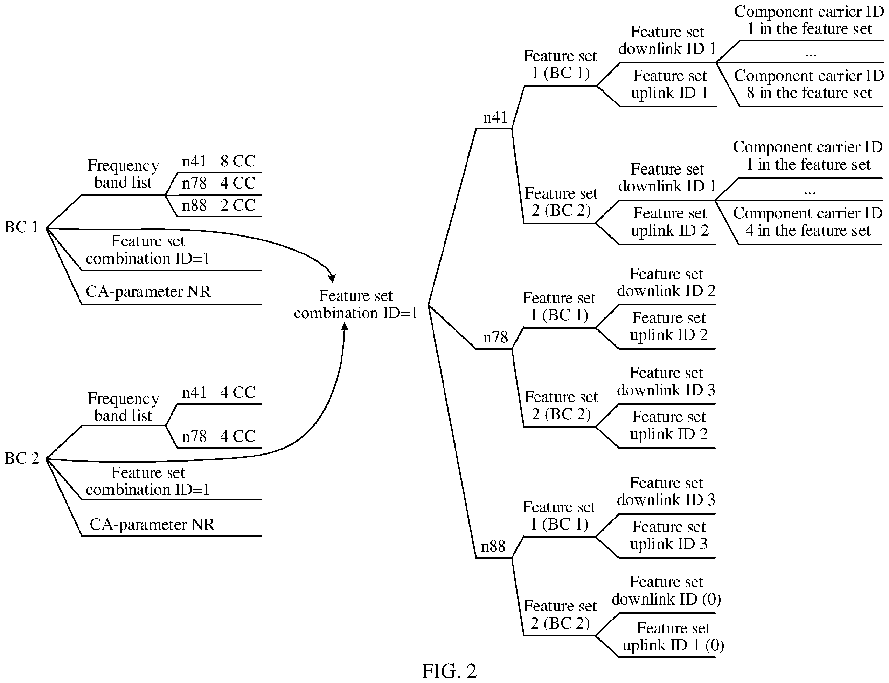

FIG. 2 shows an example of an FSC. An FSC ID is 1, and the FSC corresponds to, for example, a BC 1 and a BC 2. The BC 1 is a combination of a frequency band n41, a frequency band n78, and a frequency band n88. A quantity of carriers that participate in the BC 1 combination and that are on the frequency band n41 is 8, a quantity of carriers that participate in the BC 1 combination and that are on the frequency band n78 is 4, and a quantity of carriers that participate in the BC 1 combination and that are on the frequency band n88 is 2. The BC 2 is a combination of the frequency band n41 and the frequency band n78. A quantity of carriers that participate in the BC 2 combination and that are on the frequency band n41 is 4, and a quantity of carriers that participate in the BC 2 combination and that are on the frequency band n78 is 4. The FSC may include feature sets of the frequency band n41, the frequency band n78, and the frequency band n88. The feature set of the frequency band n41 is used as an example. The feature set further includes a feature set 1 of the frequency band n41 corresponding to the BC 1 and a feature set 2 of the frequency band n41 corresponding to the BC 2. For example, the feature set 1 of the frequency band n41 corresponding to the BC 1 includes a feature set downlink ID 1 (FeatureSetDownlink ID1) and a feature set uplink ID 1 (FeatureSetUplink ID1), which respectively indicate a downlink capability and an uplink capability of the frequency band n41 in the BC 1. For example, the feature set downlink ID 1 of the feature set 1 corresponding to the frequency band n41 further includes IDs of eight carriers that participate in the BC 1 combination and that are on the frequency band n41. For example, the IDs of the eight carriers are respectively component carrier IDs (FeatureSetPerCC ID) 1 to 8 in the feature set 1. For another example, the feature set 2 of the frequency band n41 corresponding to the BC 2 includes a feature set downlink ID 1 (FeatureSetDownlink ID1) and a feature set uplink ID 2 (FeatureSetUplink ID2), which respectively indicate a downlink capability and an uplink capability of the frequency band n41 in the BC 2. The feature set downlink ID 1 of the feature set 2 corresponding to the frequency band n41 further includes IDs of four carriers that participate in the BC 2 combination and that are on the frequency band n41. For example, the IDs of the four carriers are respectively component carrier IDs (FeatureSetPerCC ID) 1 to 4 in the feature set 2. Other content included in the FSC is similar. Details are not described again.

(3) In user-to-network interface universal (user-to-network interface universal, Uu) positioning Uu positioning, transmission of information such as a positioning reference signal, positioning assistance data, and a positioning measurement result is performed through a Uu interface. "U" in Uu indicates a user-to-network interface (user-to-network interface), and "u" in Uu indicates universal (universal). The Uu interface is a cellular communication interface, and requires participation of an access network device.

(4) Sidelink (sidelink, SL) positioning SL positioning is a technology in which an SL is used for sending a sidelink positioning reference signal (sidelink positioning reference signal, S-PRS) and performing positioning measurement. Transmission of the positioning reference signal may be performed between UEs through a PC5 (proximity-based services communication 5, proximity-based services communication 5) interface, but transmission of information such as the positioning assistance data and the positioning measurement result may be performed through the PC5 interface or the Uu interface.

(5) Positioning reference signal

The positioning reference signal may be understood as a signal that can be used for positioning or that can provide a reference for positioning. In embodiments of this application, the positioning reference signal may include one or more of a downlink positioning reference signal (downlink positioning reference signal, DL-PRS), an uplink sounding reference signal (uplink sounding reference signal, UL-SRS), a positioning reference signal (positioning reference signal, PRS), or an S-PRS. In addition, one or more of other reference signals such as a channel state information reference signal (channel state information reference signal, CSI-RS), a synchronization signal and physical broadcast channel (physical broadcast channel, PBCH) block (synchronization signal and PBCH block, SSB), and a time-frequency tracking reference signal (Tracking Reference Signal, TRS) may also be used for positioning. The positioning reference signal in this application is a reference signal that can be used to position information. A specific form of the positioning reference signal is not limited in embodiments of this application.

The DL-PRS is used in a downlink positioning method and an uplink and downlink joint positioning method.

For the UL-SRS, in a broad sense, the SRS may include an uplink reference signal used for multiple-input multiple-output (multiple-input multiple-output, MIMO) (namely, a MIMO-SRS), and an uplink positioning reference signal dedicated to positioning (that is, a positioning-sounding reference signal (positioning-SRS, pos-SRS)). Both the MIMO-SRS and the pos-SRS may be used in the uplink positioning method and the uplink and downlink joint positioning method. In addition, when used for the positioning, the UL-SRS may also be referred to as an uplink positioning reference signal.

The PRS may include a DL-PRS and/or a UL-SRS.

The S-PRS is a reference signal transmitted on the SL and dedicated to positioning in an SL scenario.

(6) The first device, the second device, or the third device in embodiments of this application may be a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device, for example, a terminal device, a fixed device or a mobile device in a terminal device, or a wireless apparatus built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D), vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, a smart wearable, smart transportation, a smart city (smart city), an unmanned aerial vehicle, and a robot. The terminal device may be sometimes referred to as a UE, a terminal, an access station, a UE station, a remote station, a wireless communication device, a user apparatus, or the like. For ease of description, an example in which the terminal device is the UE is used for description in embodiments of this application.

In addition, the first device, the second device, or the third device may alternatively be a network device. For explanations of the network device, refer to the following descriptions.

(7) The network device may include an access network device, is an access device through which the terminal device accesses a mobile communication system in a wireless manner, and includes an access network (access network, AN) device, for example, a base station. The access network device may alternatively include a device that communicates with the terminal device through an air interface. The access network device may include an evolved NodeB (evolved NodeB) in a long term evolution (long term evolution, LTE) system or a long term evolution-advanced (long term evolution-advanced, LTE-A) system, where the evolved NodeB may be referred to as an eNB or an e-NodeB for short. The eNB is an apparatus that is deployed in a radio access network, that meets a fourth generation (fourth generation, 4G) mobile communication technology standard, and that provides a wireless communication function for the terminal device. Alternatively, the access network device may be a new radio controller (new radio controller, NR controller), may be a gNodeB (gNodeB, gNB) in a 5G system, may be a central network element (central unit), may be a new radio base station, may be a remote radio unit, may be a micro base station (also referred to as a small cell), may be a relay (relay), may be a distributed network element (distributed unit), may be a macro base station in various forms, or may be a transmission reception point (transmission reception point, TRP), a reception point (reception point, RP), a transmission measurement function (transmission measurement function, TMF), a transmission point (transmission point, TP), or any other radio access device. Embodiments of this application are not limited thereto. The access network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. A specific technology and a specific device form that are used by the access network device are not limited in embodiments of this application. The network device may correspond to the eNB in the 4G system, and correspond to the gNB in the 5G system.

The base station in embodiments of this application may include a central unit (central unit, CU) and a distributed unit (distributed unit, DU). A plurality of DUs may be centrally controlled by one CU. The CU and the DU may be divided based on functions of protocol layers of a wireless network that are of the CU and the DU. For example, functions of a PDCP layer and a protocol layer above the PDCP layer are set on the CU, and functions of protocol layers below the PDCP layer, such as a radio link control (Radio Link Control, RLC) layer and a media access control (media access control, MAC) layer, are set on the DU. It should be noted that division into the protocol layers is merely an example, and there may be other division of protocol layers. A radio frequency apparatus may be remotely deployed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by the UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

The network device may further include a core network device, for example, include a location management function (location management function, LMF) network element, a mobility management entity (mobility management entity, MME), or a broadcast multicast service center (broadcast multicast service center, BMSC), or may include a corresponding functional entity in the 5G system, for example, a core network control plane (control plane, CP) or user plane (user plane, UP) network function, for example, an SMF or an access and mobility management function (access and mobility management function, AMF). A core network control plane may also be understood as a core network control plane function (control plane function, CPF) entity.

The terminal device in embodiments of this application is connected to a radio access network (radio access network, RAN) network element in a wireless manner. The radio access network element is connected to the core network device in a wireless or wired manner. The core network device and the radio access network element may be different independent physical devices, a function of the core network device and a logical function of the radio access network element may be integrated into one physical device, or some functions of the core network device and some functions of the radio access network element may be integrated into one physical device. The terminal device may be located at a fixed position, or may be mobile.

In embodiments of this application, a communication apparatus configured to implement a function of the network device may be a network device, or may be an apparatus, for example, a chip system, that can support the network device in implementing this function. The apparatus may be installed in the network device. In the technical solutions provided in embodiments of this application, an example in which the apparatus configured to implement the function of the network device is the network device is used to describe the technical solutions provided in embodiments of this application.

(8) Transmission point (transmission point, TP), reception point (reception point, RP), and transmission reception node (transmission reception point, TRP)

The TP may also be referred to as a transmission node, a sending node, or the like, and indicates a group of transmit antennas that are geographically located at a same location. A concept of TP is applicable to a cell, a part of a cell, or a TP that supports only a DL-PRS. The TP may include an antenna of a base station (for example, an ng-eNB or a gNB), a remote radio unit (remote radio head), a remote antenna of a base station, an antenna of the TP that supports only the DL-PRS, or the like. One cell may include one or more TPs.

The RP may also be referred to as a receiving node or the like, and indicates a group of receive antennas that are geographically located at a same location. This concept is applicable to a cell, a part of a cell, or an RP that supports only a UL-SRS. The RP may include an antenna of a base station (for example, an ng-eNB or a gNB), a remote radio unit, a remote antenna of a base station, an antenna of the RP that supports only the UL-SRS, or the like. One cell may include one or more RPs.

The TRP indicates a group of antennas that are geographically located at a same location and that support a TP and/or RP function. In this application, the antenna may also be understood as an antenna array, and one antenna array may include one or more antenna elements.

(9) Path

Communication is a pathway through which a communication device sends and/or receives a signal. If a device sends a plurality of signals through a same path, phases of these signals are continuous. If a device sends signals through different paths, phases of these signals may be continuous or discontinuous. This depends on a random phase on each path.

(10) Phase information on a resource

Phase information of a communication device on a resource may be understood as phase information or random phase information of the communication device when the communication device sends a signal on the resource, or may be understood as random phase information of the communication device when the communication device sends a signal on a path (for example, a radio frequency path) corresponding to the resource.

Due to implementation of a hardware circuit, for a signal sent on a path, a phase jump occurs in a process in which the signal is sent from a baseband circuit of a transmit end to a radio frequency circuit, and a phase after the jump is a random phase. For example, the second device is used as an example. A phase of a signal 1 generated by a baseband circuit of the second device is A. After the signal 1 arrives at a radio frequency circuit of the second device from the baseband circuit of the second device, the phase changes to B. If B is different from A, a phase jump occurs in the signal, the phase B after the jump is a random phase. The random phase of the signal may satisfy the following relationship:

$$\hat{\varphi} = \varphi + 2\pi\frac{n}{N}, n = \{0,1,...,N-1\} \qquad\qquad \text{(Formula 1)}$$

In Formula 1, $\hat{\varphi}$ indicates a random phase. For example, in Formula 1, $\varphi$ is a stable value, for example, may be modeled as Gaussian distribution, an average value of $\varphi$ is stable, and $\varphi$ is related to an internal design of a chip of a device. In addition, $\varphi$ may jitter within a specific range, that is, a variance exists. In Formula 1, $2\pi\frac{n}{N}$ is a random value part, $2\pi\frac{n}{N}$ is related to a frequency division coefficient of a path, and N indicates the frequency division coefficient of the path.

For example, when N=4, it indicates that the device can implement frequency division by four on the path, and $2\pi\frac{n}{N}$ may be any one of four values of {0°, 90°, 180°, 270°}. In an actual sending process, $2\pi\frac{n}{N}$ may be a value in {0°, 90°, 180°, 270°}. To be specific, when N=4, {0°, 90°, 180°, 270°} may be understood as a value range or a value set of the random value.

For another example, when N=8, it indicates that the device can implement frequency division by eight on the path, and $2\pi\frac{n}{N}$ may be any one of eight values of {0°, 45°, 90°, 135°, 180°, 225°, 270°, 315°}. In an actual sending process, $2\pi\frac{n}{N}$ may be a value in {0°, 45°, 90°, 135°, 180°, 225°, 270°, 315°}. To be specific, when N=8, {0°, 45°, 90°, 135°, 180°, 225°, 270°, 315°} may be understood as a value range or a value set of the random value.

That "a difference exists between phases of different signals" or "phases of different signals are discontinuous" mentioned in embodiments of this application means that these signals cannot be spliced or combined into an equivalent high-bandwidth signal. For example, a signal transmit end sends five reference signals whose bandwidths are 20 MHz. The five bandwidths may be contiguous or non-contiguous in frequency domain, and may also be spaced or overlapped in frequency domain. A signal receive end may splice the five signals to obtain a signal whose bandwidth is close to 100 MHz. A feature of the signal obtained through splicing is similar to or the same as a feature of a signal whose bandwidth is close to 100 MHz (contiguous in frequency domain) and that is directly sent by the signal transmit end.

(11) Relationship between a resource and a path In this application, the resource may also be understood as including a frequency domain resource or a frequency resource. For example, a first resource may include one or more (or one or more pieces of) frequency resources. The "frequency resource" is a segment of contiguous spectrum resources in frequency domain, and one path corresponds to one or more resources. Because there may be a plurality of resource granularities, one resource is one subcarrier, one or more resource blocks (resource blocks, RBs), one bandwidth part (bandwidth part, BWP), one component carrier, one frequency band (band), one band, one frequency layer (frequency layer), one frequency point (frequency point), or one frequency range (frequency range, FR).

For example, a frequency band is used as an example. Different frequency bands may correspond to different paths. Refer to FIG. 1. For example, the frequency band A and the frequency band B correspond to different paths. For another example, non-contiguous carriers on a same frequency band correspond to different paths. For example, in FIG. 1, the CC 3 and the CC 4 on the frequency band B may correspond to different paths. Alternatively, in some scenarios, non-contiguous carriers on a same frequency band may correspond to a same path. For example, for a high-frequency band, non-contiguous carriers on the frequency band may correspond to a same path. For another example, contiguous carriers on a same frequency band may correspond to a same path. For example, in FIG. 1, the CC 1 and the CC 2 on the frequency band A may correspond to a same path. Alternatively, in some scenarios, contiguous carriers on a same frequency band may correspond to different paths. For another example, a same carrier may correspond to a same path. For example, in FIG. 1, the CC 1 may correspond to one path, and a device uses the one path regardless of a frequency location at which the device sends a signal on the CC 1. Alternatively, in some scenarios, a same carrier may correspond to different paths. For example, in different frequency band combinations, a same carrier may correspond to different paths.

In embodiments of this application, unless otherwise specified, a quantity of nouns indicates "a singular noun or plural nouns", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first signaling and second signaling may be same signaling, or may be different signaling. In addition, this name does not indicate that content, information amounts, sending sequences, transmit ends/receive ends, priorities, importance degrees, or the like of the two pieces of signaling are different. In addition, step numbers in embodiments described in this application are merely used to distinguish between different steps, but are not used to limit a sequence of the steps. For example, S401 may occur before S402, may occur after S402, or may occur simultaneously with S402.

The following describes technical features related to embodiments of this application.

It is found through research that positioning precision depends on a bandwidth of a positioning signal to a large extent. Generally, for a positioning method based on delay information, for example, TDOA positioning and radio transmission technology (radio transmission technology, RTT) positioning, a higher bandwidth of the positioning signal indicates higher positioning precision. To improve the positioning precision, for a to-be-positioned UE, a manner of obtaining a high bandwidth is obtaining the high bandwidth in a carrier aggregation manner. In this manner, positioning signals may be sent on a plurality of carriers participating in aggregation, and the receive end may "splice" the plurality of received positioning signals into a high-bandwidth reference signal (whose bandwidth is close to a sum of total bandwidths occupied by signals sent by the transmit end), to obtain high positioning precision. However, because a difference exists between phases of signals on each carrier, the positioning precision is reduced. In view of this, the technical solutions in embodiments of this application are provided. In embodiments of this application, first information may include phase information of the second device on M resources. In this case, after receiving a signal on one or more of the M resources, the first device may determine phase information of different signals from different resources based on the first information, to avoid a possible measurement error based on the phase information. For example, an application scenario of measurement information is that the measurement information may be used for positioning measurement. In this case, according to the technical solutions in embodiments of this application, the first device may reduce or eliminate the difference between the phases of the different signals in a corresponding manner by obtaining phase information on one or more resources, to improve the positioning precision.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), or may be alternatively applied to a next generation mobile communication system or another similar communication system. This is not specifically limited. In addition, the technical solutions in embodiments of this application may be applied to a device-to-device (device-to-device, D2D) scenario, for example, an NR-D2D scenario, or may be applied to the vehicle-to-everything (vehicle-to-everything, V2X) scenario, for example, an NR-V2X scenario. For example, the technical solutions may be applied to an internet of vehicles, for example, V2X or vehicle-to-vehicle (vehicle-to-vehicle, V2V), or may be applied to a field, for example, intelligent driving, assisted driving, or an intelligent connected vehicle. If the technical solutions are applied to the D2D scenario, both communication parties may be UEs. If the technical solutions are applied to a non-D2D scenario, one party of communication may be a UE, and the other party may be a network device (for example, an access network device), or both communication parties may be network devices. In the following description process, an example in which the communication parties are respectively the UE and the access network device is used.

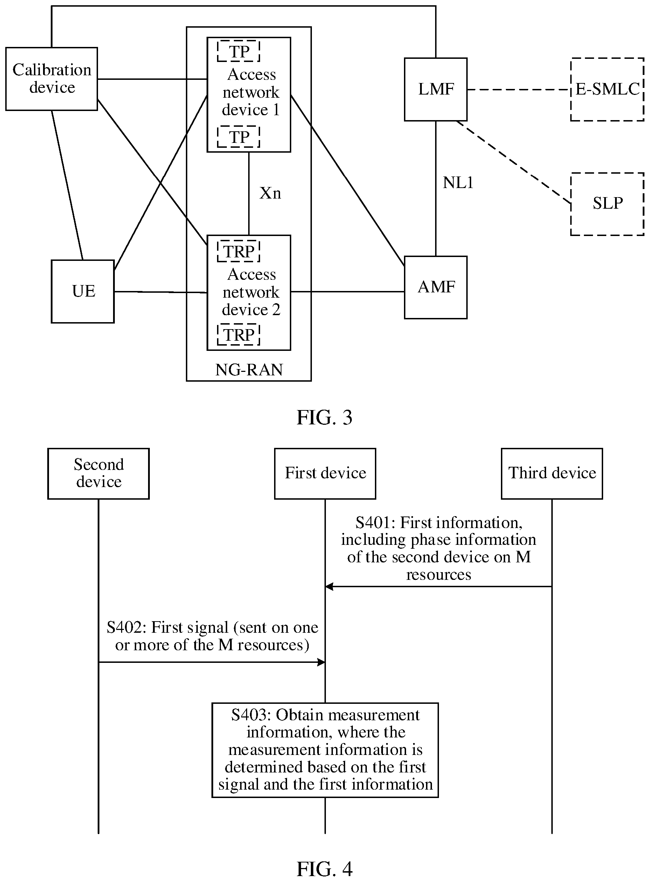

FIG. 3 is a diagram of an application scenario according to an embodiment of this application. FIG. 3 includes core network devices such as a UE (which may also be referred to as a target UE), an access network device 1, an access network device 2, an AMF, and an LMF, and includes a calibration device. It should be noted that two access network devices are used as an example in FIG. 3. An actual communication system may alternatively include three or more access network devices. The access network device 1 is, for example, a serving access network device of the target UE. The calibration device can communicate with the target UE and the access network device. Optionally, the calibration device can further communicate with the LMF. The calibration device is, for example, an access network device or a UE. In FIG. 3, for example, the access network device 1 and the access network device 2 belong to a next generation (next generation, NG) RAN, and the access network devices communicate with each other through an Xn interface. NL1 indicates a communication interface between the AMF and the LMF.

A control plane of the LMF is an enhanced serving mobile location centre (enhanced serving mobile location centre, E-SMLC), and a user plane of the LMF is a secure user plane location (secure user plane location, SUPL) location platform (SUPL location platform, SLP). The LMF is responsible for supporting different types of location services related to the target UE, including positioning the target UE, transferring assistance data to the target UE, and the like.

The AMF may receive a location service request related to the target UE, where the location service request is used to request to position the target UE. Alternatively, the AMF may start a location service for the target UE. For example, the AMF may generate a location service request. The AMF may send the location service request to the LMF, to start a positioning process for the target UE.

If in a downlink positioning process, the target UE may measure a positioning reference signal from the access network device or another device, to position the target UE.

The access network device may provide corresponding information for the target UE, for example, configure a positioning reference signal for the UE, or may send a positioning reference signal to the UE. The access network device may further send, to the LMF, information for configuring the positioning reference signal.

To better describe embodiments of this application, the following describes methods according to embodiments of this application with reference to the accompanying drawings. In the accompanying drawings corresponding to embodiments of this application, all optional steps are represented by dashed lines. The methods according to embodiments of this application may all be applied to the scenario shown in FIG. 3. For example, the first device related to embodiments of this application is the UE, the access network device 1, the access network device 2, or the LMF in FIG. 3. The second device related to embodiments of this application is, for example, the access network device 1, the access network device 2, or the UE in FIG. 3. The third device related to embodiments of this application is, for example, the second device, the calibration device, or the LMF in FIG. 3.

In embodiments of this application, the UE may send information to the access network device by using radio resource control (radio resource control, RRC) signaling. Alternatively, the UE may send to-be-sent information to the LMF (for example, the UE sends the information to the LMF by using an LTE positioning protocol (LTE positioning protocol, LPP) message). Then, the LMF sends, to the access network device, a part or all of content of the information or content obtained through adjustment/modification on the information (for example, the LMF sends the information to the access network device by using an NR positioning protocol annex (NR positioning protocol annex, NRPPa) message). The access network device may send information to the UE by using a broadcast message or a unicast message. The broadcast message is, for example, a system information block (system information block, SIB) or a positioning system information block (positioning system information block, posSIB). The unicast message is, for example, RRC signaling. Alternatively, the access network device may send, to the LMF, a part or all of content of to-be-sent information or content obtained through adjustment/modification on to-be-sent information (for example, the access network device sends the information to the LMF by using an NRPPa message). Then, the LMF sends the information to the UE (for example, the LMF sends the information to the UE by using an LPP message). The calibration device may be a device of a terminal type, a device of an access network device type, or a device of another type. For information exchange between the calibration device and the first device/the second device depends on a type of the calibration device, refer to the foregoing descriptions. This is not limited in this application. The calibration device may send to-be-sent information to the first device, send to-be-sent information to the first device through another device (for example, the second device, the access network device, or the LMF), or the like. For a subsequent information sending process, refer to the descriptions in this paragraph. Details are not described below again.

An embodiment of this application provides a first communication method. FIG. 4 is a flowchart of the method.

S401: A third device sends first information. Correspondingly, a first device receives the first information.

If technical solutions in embodiments of this application are applied to a positioning scenario, a positioning process provided in embodiments of this application may be an uplink positioning process, a downlink positioning process, a joint uplink and downlink positioning process, a ranging/angle measurement/phase measurement (uplink measurement and downlink measurement are not distinguished) process, or a sensing (Sensing) process. The following uses the uplink positioning process as an example for description. For example, a second device is a UE, and the first device is an access network device. Alternatively, the positioning process provided in this embodiment of this application may be the downlink positioning process. For example, a second device is an access network device, and the first device is a UE. Alternatively, the positioning process provided in this embodiment of this application may be the uplink and downlink positioning process. For example, in the uplink and downlink positioning process, the method in this embodiment of this application may be performed twice. In one execution process, a second device is a UE, and the first device is an access network device. In the other execution process, a second device is an access network device, and the first device is a UE. In addition, a plurality of access network devices may participate in positioning. In this embodiment of this application, behavior of one of the access network devices is described. Optionally, the access network device is, for example, a serving access network device of the UE. In the foregoing scenario, the third device may be a same device as the first device or the second device, or the third device may be another device. For example, the third device is an LMF, or is a UE or an access network device other than the first device and the second device.

The first information may include (or indicate) phase information of the second device on M resources. Optionally, the phase information of the second device on the M resources may be understood as phase information corresponding to a second resource in the M resources. Therefore, it may also be understood that the first information may include (or indicate) the phase information corresponding to the second device on the M resources. For example, the M resources are M frequency resources. For example, the M resources are all or a part of frequency resources supported by the second device, and M is a positive integer. Optionally, the M resources are frequency resources that are used for positioning and that are in the frequency resources supported by the second device. This is equivalent to that only phase information of the second device on a frequency resource used for positioning is sent to the first device, and phase information of the second device on a frequency resource of another service or function does not need to be sent to the first device. In this way, hardware implementation of the second device is not excessively exposed, and this helps protect privacy and security of the second device.

In this embodiment of this application, one of the M resources may correspond to one or more paths. For example, the M resources are in one-to-one correspondence with M paths. For another example, one of the M resources corresponds to a plurality of paths. For still another example, a plurality of resources in the M resources correspond to one path.

Optionally, if different frequency bands correspond to different paths, and all carriers on one frequency band correspond to a same path, the M resources are, for example, M frequency bands. Alternatively, if different carriers correspond to different paths, the M resources are, for example, M carriers. Alternatively, if contiguous carriers on one frequency band correspond to a same path, and non-contiguous carriers on one frequency band correspond to different paths, one of the M resources is, for example, a plurality of contiguous carriers on a frequency band 1, and another resource in the M resources is, for example, a carrier 1 on a frequency band 2. The carrier 1 and another carrier on the frequency band 2 are non-contiguous, and the frequency band 1 and the frequency band 2 are a same frequency band or different frequency bands. In addition, there may alternatively be another implementation of the M resources, provided that one of the resources corresponds to one path.

It should be noted that the first information indicates phase information of the second device when the second device sends a signal on the M resources, but does not necessarily indicate that the second device sends the signal on all of the M resources in the process. Alternatively, the signal may be sent on some of the M resources.

The first information may be implemented in a plurality of manners, which are described below by using examples.

1. Manner 1

The M resources may belong to one or more resource combinations, and the first information may include phase information of the second device on a resource in at least one of the one or more resource combinations. A first resource in the M resources is used as an example. The first resource may be any one of the M resources, and the M resources include the first resource. The first resource belongs to a first resource combination. In this implementation, the first information may include phase information of the second device on the first resource in the first resource combination.

Optionally, when a resource combination is a frequency band combination, the first resource combination is a first frequency band combination. Because one frequency band combination may include one or more carriers, or include one or more frequency bands, the first resource may be one carrier or one frequency band. If the first resource is one frequency band, the first information may include phase information of the second device on a part or all of frequency bands in at least one of the one or more frequency band combinations. Alternatively, if the first resource is one carrier, the first information may include phase information of the second device on a part or all of carriers in at least one of the one or more frequency band combinations.

In Manner 1, the first resource may belong to a plurality of resource combinations. In other words, in a plurality of resource combinations included in the M resources, two or more resource combinations all include the first resource. In this case, the first resource may correspond to a plurality of paths.

As described above, the first resource may belong to the first resource combination. In an optional manner, if the first resource corresponds to the plurality of paths, the first resource belongs to the plurality of resource combinations. For example, the first resource belongs to the first resource combination and a second resource combination. In this case, the first information may include the phase information of the second device on the first resource in the first resource combination and phase information of the second device on the first resource in the second resource combination.

For example, the M resources are a frequency band 1 to a frequency band 3. For example, the three frequency bands may form four frequency band combinations: a frequency band combination 1, a frequency band combination 2, a frequency band combination 3, and a frequency band combination 4. The frequency band combination 1 includes the frequency band 1 and a frequency band 2, the frequency band combination 2 includes the frequency band 1 and the frequency band 3, the frequency band combination 3 includes the frequency band 2 and the frequency band 3, and the frequency band combination 4 includes the frequency band 1, the frequency band 2, and the frequency band 3. For example, the first resource is the frequency band 1. It may be learned that the frequency band 1 belongs to the frequency band combination 1, the frequency band combination 2, and the frequency band combination 4. The first information may indicate phase information of the second device on the frequency band 1 in the frequency band combination 1, and indicate phase information of the second device on the frequency band 1 in the frequency band combination 2.

For example, if the second device sends a signal on two non-contiguous carriers on a same frequency band, the signal may be sent through two paths. Different carriers may correspond to different paths, that is, different paths may be used for the non-contiguous carriers. For example, the CC 3 and the CC 4 in FIG. 1 are non-contiguous carriers belonging to the frequency band B, and the frequency band B belongs to two frequency band combinations, for example, the frequency band combination 1 and the frequency band combination 2. In this case, the following two cases may exist.

In a first case, the CC 3 and the CC 4 belong to frequency bands B in different frequency band combinations. For example, the CC 3 belongs to the frequency band B in the frequency band combination 1, and the CC 4 belongs to the frequency band B in the frequency band combination 2. In a possible implementation, phase information of the CC 3 is associated with the frequency band B in the frequency band combination 1, and phase information of the CC 4 is associated with the frequency band B in the frequency band combination 2. In other words, two pieces of phase information need to be reported.

In a second case, the CC 3 and the CC 4 belong to a frequency band B in a same frequency band combination. For example, both the CC 3 and the CC 4 belong to the frequency band B in the frequency band combination 1. In a possible implementation, phase information of the CC 3 and phase information of the CC 4 is associated with the frequency band B in the frequency band combination 1. In other words, only one piece of phase information needs to be reported.

If in the first case, phase information of the second device on non-contiguous carriers included in a same frequency band may be different. To notify the first device of all phase information of the second device on the frequency band, the frequency band may be separately included in different frequency band combinations, and the frequency band may include different carriers in the different frequency band combinations. In this way, the phase information of the second device on the non-contiguous carriers may be indicated to the first device. In a possible implementation, the frequency band B in the frequency band combination 1 includes the CC 3, and the frequency band B in the frequency band combination 2 includes the CC 4. The first information may indicate phase information of the second device on the frequency band B included in the frequency band combination 1. This is equivalent to indicating the phase information of the second device on the CC 3. In addition, the first information may indicate phase information of the second device on the frequency band B included in the frequency band combination 2. This is equivalent to indicating the phase information of the second device on the CC 4.

Optionally, the phase information of the second device on the first resource in the first resource combination may include one or more of the following: a phase of the second device on the first resource in the first resource combination; a quantity of phases of the second device on the first resource in the first resource combination; a phase value set or a phase value range of the second device on the first resource in the first resource combination; phase error information of the second device on the first resource in the first resource combination; or a difference between a phase of the second device on the second resource and a phase of the second device on the first resource in the first resource combination. The second resource is a resource other than the first resource included in the M resources. For example, the second resource is included in the second resource combination.

The phase of the second device on the first resource in the first resource combination may be an actual phase, or referred to as an absolute phase, of the second device when the second device sends a signal on a path corresponding to the first resource in the first resource combination, that is, is an actual value of a phase of the second device when the second device sends the signal on the path corresponding to the first resource in the first resource combination. Alternatively, the phase of the second device when the second device sends a signal on the first resource in the first resource combination may be a relative phase of the second device when the second device sends a signal on a path corresponding to the first resource in the first resource combination, and the relative phase is, for example, a difference between a reference phase and an actual phase of the second device when the second device sends the signal on the path corresponding to the first resource in the first resource combination.

The reference phase is, for example, a maximum value or a minimum value of phases indicated by the first information, or is a phase in phases indicated by the first information. For example, if the first information indicates three phases: 90°, 180°, and 270°, the reference phase may be 90° or 270°, or the reference phase may be any one of the three phases, for example, 180°. In this manner, only one absolute value (for example, the maximum value) needs to be reported as the reference phase, and only a relative value of the reference phase needs to be reported for another phase. The value is small, and a quantity of bits may be reduced. Alternatively, the reference phase may not be determined based on the first information, but is a fixed value, for example, 180°. The fixed value may be set by the first device and notified to the third device, may be set by the third device and notified to the first device, may be determined through negotiation between the first device and the third device, may be set by an LMF, may be predefined in a protocol, or may be preconfigured in the first device and/or the third device. For example, the first resource in the first resource combination corresponds to one path. If the actual phase of the second device when the second device sends the signal on the path corresponding to the first resource in the first resource combination is 90°, the phase information of the second device on the first resource in the first resource combination may include 90°. For another example, if the reference phase is 90°, and the actual phase of the second device when the second device sends the signal on the path corresponding to the first resource in the first resource combination is 90°, the phase information of the second device on the first resource in the first resource combination may include 0°. If the first information includes the phase of the second device on the first resource in the first resource combination, the first device may directly learn of the phase of the second device on the first resource in the first resource combination, so that a difference between phases of these signals is determined without an additional operation. This is simple.

The quantity of phases of the second device on the first resource in the first resource combination may include a quantity of paths corresponding to the second device on the first resource in the first resource combination. For example, if the quantity of paths corresponding to the second device on the first resource in the first resource combination is 1, the quantity of phases of the second device on the first resource in the first resource combination is 1 or 0. Alternatively, if the quantity of paths corresponding to the second device on the first resource in the first resource combination is greater than 1, the quantity of phases of the second device on the first resource in the first resource combination is greater than or equal to 1. Optionally, the quantity of phases of the second device on the first resource in the first resource combination is equal to the quantity of paths corresponding to the second device on the first resource in the first resource combination. The first device can obtain, based on the quantity of phases of the second device on the first resource in the first resource combination, information about a difference between phases of signals received on the first resource in the first resource combination. For example, if the quantity of phases of the second device on the first resource in the first resource combination is 1 or 0, it indicates that one path is shared for the second device to send signals on the first resource in the first resource combination. In this case, the first device can determine that a difference between phases of different signals received by the first device on the first resource in the first resource combination is 0. For another example, if the quantity of phases of the second device on the first resource in the first resource combination is 4, it indicates that four different paths may be used by the second device for sending signals on the first resource in the first resource combination. In this case, the first device can determine that there are four possible absolute values of a difference between phases of two signals received by the first device on the first resource in the first resource combination, for example, 0°, 90°, 180°, and 270°, to assist the first device in determining measurement information.

The phase value set or the phase value range of the second device on the first resource in the first resource combination may include a phase value set or a phase value range of the second device when the second device sends a signal on one or more paths corresponding to the first resource in the first resource combination. The phase value set of the second device on the first resource in the first resource combination may be a value set of $\hat{\varphi}$ in Formula 1 or a value set of $2\pi \frac{n}{N}$ in Formula 1. Similarly, the phase value range of the second device on the first resource in the first resource combination may be a value range of $\hat{\varphi}$ in Formula 1 or a value range of $2\pi \frac{n}{N}$ in Formula 1. For example, if a frequency division coefficient of a path used by the second device for sending the signal on the first resource in the first resource combination is 4, the first information may include a phase value set or a phase value range corresponding to the path, for example, {(-5°, 5°), (85°, 95°), (175°, 185°), (265°, 275°)}. The phase value set or the phase value range is the value set of $\hat{\varphi}$ in Formula 1. (x, y) indicates that the value range is greater than x and less than y. For example, (85°, 95°) may indicate that the value range is greater than 85° and less than 95°.

For another example, the first information may include a phase value set of a path corresponding to the second device on the first resource in the first resource combination, for example, {0°, 90°, 180°, 270°}. The phase value set is, for example, the value set of $2\pi \frac{n}{N}$ in Formula 1. After obtaining the phase value set or the phase value range of the second device on the first resource in the first resource combination, the first device may determine the phase information of the second device on the first resource in the first resource combination based on the phase value set or the phase value range. A specific determining manner is described below.

The phase error information of the second device on the first resource in the first resource combination may include phase error information of the second device when the second device sends the signal on the one or more paths corresponding to the first resource in the first resource combination. The phase error information of the second device when the second device sends a signal on a path corresponding to the first resource in the first resource combination may include error information of a phase value of the second device when the second device sends the signal on the path corresponding to the first resource in the first resource combination, or include error information of a phase value set of the second device when the second device sends the signal on the path corresponding to the first resource in the first resource combination. Error information of a phase (an actual phase) of the second device when the second device sends a signal on a path corresponding to the first resource in the first resource combination may include one or more of the following: a phase error upper bound, a phase error lower bound, a phase error average value, a phase error variance, a phase error standard deviation, or a phase error range. For example, the error information of the phase of the second device when the second device sends the signal on the path corresponding to the first resource in the first resource combination is {-10°, 10°}. This indicates that the phase has a ±10° error. For example, the first device may determine, based on the phase error information by using a search algorithm, the phase of the second device when the second device sends the signal on the first resource in the first resource combination. The phase error information may be used as assistance information, and the first device does not need to perform full-range search. This improves search efficiency.

The difference between the phase of the second device on the second resource and the phase of the second device on the first resource in the first resource combination may include a difference between a phase of the second device when the second device sends a signal on a path corresponding to the second resource and a phase of the second device when the second device sends a signal on the path corresponding to the first resource in the first resource combination. For example, the second resource in this case is included in the second resource combination, and the second resource combination and the first resource combination may be a same resource combination or different resource combinations. For example, the M resources include a resource 1 to a resource 3, and the M resources belong to two resource combinations. The resource combination 1 includes the resource 1 and the resource 2, and the resource combination 2 includes the resource 2 and the resource 3. For example, the first information may include one or more of the following: a difference between a phase of the second device on the resource 1 in the resource combination 1 and a phase of the second device on the resource 2 in the resource combination 1, a difference between the phase of the second device on the resource 1 in the resource combination 1 and a phase of the second device on the resource 2 in the resource combination 2, a difference between the phase of the second device on the resource 1 in the resource combination 1 and a phase of the second device on the resource 3 in the resource combination 2, a difference between the phase of the second device on the resource 2 in the resource combination 1 and the phase of the second device on the resource 2 in the resource combination 2, a difference between the phase of the second device on the resource 2 in the resource combination 1 and the phase of the second device on the resource 3 in the resource combination 2, and a difference between the phase of the second device on the resource 2 in the resource combination 2 and the phase of the second device on the resource 3 in the resource combination 2. In this way, when the second device sends a signal on a corresponding resource, the first device can learn of a difference between phases of corresponding signals.

Optionally, the first information may include a phase difference that is not 0. If a difference between phases of the second device when the second device sends signals on two resources is 0, the phase difference may not be included in the first information. For example, if the difference between the phase of the second device on the second resource and the phase of the second device on the first resource in the first resource combination is not 0, the first information may include the phase difference. However, if the difference between the phase of the second device on the second resource and the phase of the second device on the first resource in the first resource combination is 0, the first information may not include the phase difference. For example, in the foregoing example in which the first information includes all the enumerated items, if the difference between the phase of the second device when the second device sends a signal on the resource 2 in the resource combination 2 and the phase of the second device when the second device sends a signal on the resource 3 in the resource combination 2 is 0, the phase difference may not be included in the first information. If finding that the first information does not include a difference between phases of some resources, the first device may determine that the difference between the phases of these resources is 0. In this way, the first device can obtain a difference between phases of different resources, and signaling overheads can be reduced.

Optionally, the first information may alternatively include a phase difference that is 0. For example, if a difference between phases of the second device when the second device sends signals on two resources is not 0, the phase difference may not be included in the first information. If finding that the first information does not include a difference between phases of some resources, the first device may determine that the difference between the phases of these resources is not 0. In this way, the first device can learn whether a difference exists between phases of different resources, and signaling overheads can be reduced.

One phase difference relates to at least two resources. For example, the difference between the phase of the second device on the second resource in the second resource combination and the phase of the second device on the first resource in the first resource combination relates to the second resource in the second resource combination and the first resource in the first resource combination. Therefore, optionally, the phase difference may be repeatedly included in the first information. For example, if the first information may include information about the first resource in the first resource combination, the information about the first resource in the first resource combination may include the phase difference. If the first information further includes information about the second resource in the second resource combination, the information about the second resource in the second resource combination may also include the phase difference. Alternatively, the first information may include the phase difference only once. In other words, the phase difference appears only once in the first information. For example, the first information includes the information about the first resource in the first resource combination, and the information about the first resource in the first resource combination may include the phase difference. The first information further includes the information about the second resource in the second resource combination, and the information about the second resource in the second resource combination may not include the phase difference. Optionally, the first information may include a first indication corresponding to the second resource in the second resource combination, and the first indication may indicate the first resource in the first resource combination, to indicate that the phase difference is included in the information about the first resource in the first resource combination. In this manner, the signaling overheads can be reduced.

In addition, the first information may further include phase information of the second device on another resource in the M resources. For this, refer to the foregoing descriptions of the first resource. Details are not described again.

2. Manner 2

In some scenarios, the second device uses a same path on one or more frequency band combinations, the second device uses a same path on a frequency band regardless of a frequency band combination to which the frequency band belongs, or the second device uses a same path on a carrier regardless of a frequency band combination to which the carrier belongs. Therefore, Manner 2 is proposed.

The first information may include phase information of the second device on at least one of the M resources. For example, one of the M resources is a first resource, and the first information may include phase information of the second device on the first resource.

Optionally, the first resource is a frequency band combination, and the M resources are M frequency band combinations. Alternatively, the first resource is, for example, a frequency band, and the M resources are M frequency bands. Alternatively, the first resource is a carrier, and the M resources are M carriers. Manner 2 is simple, and transmission overheads caused by the first information can be reduced.

Optionally, the first information may include a phase difference that is not 0. If a difference between phases of the second device when the second device sends signals on two resources is 0, the phase difference may not be included in the first information. For example, if a difference between a phase of the second device when the second device sends a signal on the second resource and a phase of the second device when the second device sends a signal on the first resource is not 0, the first information may include the phase difference. However, if a difference between a phase of the second device when the second device sends a signal on the second resource and a phase of the second device when the second device sends a signal on the first resource is 0, the first information may not include the phase difference. The second resource is a resource other than the first resource in the M resources.

Optionally, the first information may alternatively include a phase difference that is 0. For example, if a difference between phases of the second device when the second device sends signals on two resources is not 0, the phase difference may not be included in the first information.

One phase difference relates to at least two resources. For example, the difference between the phase of the second device when the second device sends the signal on the second resource and the phase of the second device when the second device sends the signal on the first resource relates to the second resource and the first resource. Therefore, optionally, the phase difference may be repeatedly included in the first information. For content of this part, refer to related descriptions of Manner 1.

It should be understood that the first resource is any one of the M resources.

3. Manner 3

For example, if one of the M resources is one resource set, the M resources may be M resource sets.

Optionally, the resource set is a carrier set, and one resource set may include one or more carriers. For example, when the second device sends signals on carriers included in one resource set, a same path is used; or when the second device sends signals on different resource sets, different paths are used. In other words, a resource set corresponds to a path. FIG. 1 is used as an example. For example, when the second device sends signals on the CC 1 and the CC 2 included in the frequency band A, a path 1 is used. When the second device sends a signal on the CC 3 included in the frequency band B, a path 2 is used. When the second device sends a signal on the CC 4 included in the frequency band B, a path 3 is used. In this case, the CC 1 and the CC 2 may belong to one carrier set, for example, referred to as a carrier set 1. The CC 3 belongs to another carrier set, for example, referred to as a carrier set 2. The CC 4 belongs to still another carrier set, for example, referred to as a carrier set 3.

Optionally, in this implementation, for example, the M resources include a first resource, the first resource is any one of the M resources, and the first resource may be a resource set, for example, referred to as a first resource set. For the first resource set, the first information may include one or more of the following: phase information of the second device on the first resource set, an identifier of the first resource set, or a resource identifier in the first resource set.

The first resource set is still used as an example. Optionally, the phase information of the second device on the first resource set may include one or more of the following: a phase of the second device on the first resource set, a quantity of phases of the second device on the first resource set, a phase value set or a phase value range of the second device on the first resource set, phase error information of the second device on the first resource set, or a difference between a phase of the second device on a second resource set and a phase of the second device on the first resource set. The second resource set is a resource set other than the first resource set in the M resource sets.

The phase of the second device on the first resource set may be an actual phase, or referred to as an absolute phase, of the second device when the second device sends a signal on a path corresponding to the first resource set, that is, is an actual value of a phase of the second device when the second device sends the signal on the path corresponding to the first resource set. Alternatively, the phase of the second device on the first resource set may be a relative phase of the second device when the second device sends a signal on a path corresponding to the first resource set. The relative phase is, for example, a difference between a reference phase and an actual phase of the second device when the second device sends the signal on the path corresponding to the first resource set. For more descriptions, refer to the foregoing first implementation.

The quantity of phases of the second device on the first resource set may include a quantity of paths corresponding to the second device on the first resource set. For more descriptions, refer to the foregoing first implementation.

The phase value set or the phase value range of the second device on the first resource set may include a phase value set or a phase value range of the second device when the second device sends the signal on the path corresponding to the first resource set. For more descriptions, refer to the foregoing first implementation.

The phase error information of the second device on the first resource set may include phase error information of the second device when the second device sends the signal on the path corresponding to the first resource set. The phase error information of the second device when the second device sends the signal on the path corresponding to the first resource set may include error information of a phase value of the second device when the second device sends the signal on the path corresponding to the first resource set, or include error information of the phase value set of the second device when the second device sends the signal on the path corresponding to the first resource set. Error information of a phase (an actual phase or any phase in a phase value set) of the second device when the second device sends the signal on the path corresponding to the first resource set may include one or more of the following: a phase error upper bound, a phase error lower bound, a phase error average value, a phase error variance, a phase error standard deviation, or a phase error range.

The difference between the phase of the second device on the second resource set and the phase of the second device on the first resource set may include a difference between a phase of the second device when the second device sends a signal on a path corresponding to the second resource set and the phase of the second device when the second device sends the signal on the path corresponding to the first resource set.

Optionally, the first information may include a phase difference that is not 0. If a difference between phases of the second device when the second device sends signals on two resource sets is 0, the phase difference may not be included in the first information. For example, if the difference between the phase of the second device on the second resource set and the phase of the second device on the first resource set is not 0, the first information may include the phase difference. However, if the difference between the phase of the second device on the second resource set and the phase of the second device on the first resource set is 0, the first information may not include the phase difference.

Optionally, the first information may alternatively include a phase difference that is 0. For example, if a difference between phases of the second device when the second device sends signals on two resource sets is not 0, the phase difference may not be included in the first information.

A phase difference relates to at least two resources. For example, the difference between the phase of the second device when the second device sends the signal on the second resource set and the phase of the second device when the second device sends the signal on the first resource set relates to the second resource set and the first resource set. Therefore, optionally, the phase difference may be repeatedly included in the first information. For content of this part, refer to related descriptions of Manner 1.

In addition, the first information may further include phase information of the second device on another resource set in the M resource sets. For this, refer to the foregoing descriptions of the first resource set. Details are not described again.

4. Manner 4

In some scenarios, one device may use a same path. In other words, for the device, a same path is used regardless of a resource on which a signal is sent. Therefore, Manner 4 is proposed.

The first information may include phase information of the second device, and the phase information is applicable to at least one of the M resources. For example, in this case, the first information only needs to indicate or include phase information of the second device when the second device sends a signal. Therefore, signaling overheads of the first information can be reduced, and an indication manner can be simplified.

In addition, it may be learned from the foregoing descriptions that if the second device sends a plurality of signals on one path, phases of the plurality of signals may be continuous for the second device. Therefore, the first information may also be used as a reference when a network configures a resource. For example, a to-be-sent signal (for example, a first signal) is configured on a same path as much as possible, to reduce complexity of a receive end.

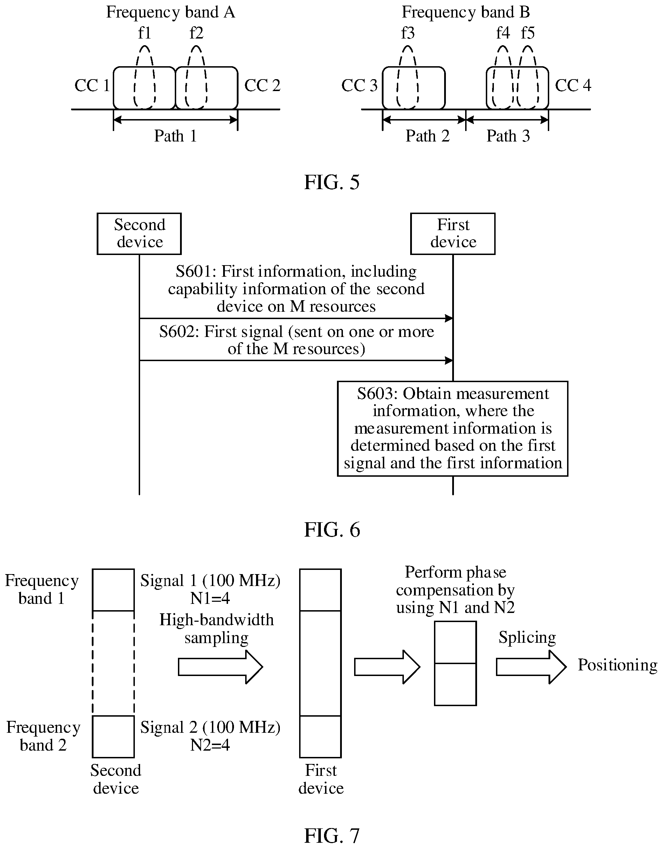

Optionally, the first information may be included in capability information of the second device. For descriptions of this part of content, refer to the embodiment shown in FIG. 6 that is to be described below.

S402: The second device sends the first signal on one or more of the M resources. Correspondingly, the first device receives the first signal from the second device on the one or more of the M resources. The first signal may be sent in a broadcast manner, a multicast manner, a unicast manner, or the like. If the first signal is broadcast or multicast, a plurality of devices can receive the first signal. The first device is, for example, one of the receiving devices. If the first signal is unicast, the first signal is a signal sent by the second device to the first device.

Optionally, the second device may simultaneously send the first signal on one or more resources. Alternatively, the first signal on the one or more resources may not be simultaneously sent. For example, the second device sends the first signal in a frequency hopping manner.

The first signal may include S signals, and S may be an integer greater than or equal to 2. For example, a signal sent by the second device on one frequency band may be understood as one signal, and the M resources are, for example, M frequency bands. In this case, the first signal may be sent on S frequency bands in the M frequency bands. For another example, a signal sent by the second device on one carrier may be understood as one signal, and the M resources are, for example, M carriers. In this case, the first signal may be sent on S carriers in the M carriers. For example, the S carriers may be S component carriers participating in carrier aggregation. For another example, a signal sent by the second device on one BWP is understood as one signal, and the M resources are, for example, M BWPs. In this case, the first signal may be sent on S BWPs in the M BWPs, and the S BWPs may be included in one or more carriers. Alternatively, a division granularity of the first signal may be smaller. For example, a signal sent by the second device on one frequency unit is understood as one signal, and the M resources are, for example, M frequency units. In this case, the first signal may be sent on S frequency units in the M frequency units, and the S frequency units may be included in one or more carriers. A granularity of the frequency unit is less than a granularity of the BWP. For example, a frequency domain range occupied by the frequency unit is less than a frequency domain range occupied by the BWP.

Refer to FIG. 5. f1 to f5 indicate five frequency units. For example, when the second device sends a signal on a frequency band A in FIG. 5, a path 1 is used. When the second device sends a signal on a CC 3 on a frequency band B in FIG. 5, a path 2 is used. When the second device sends a signal on a CC 4 on the frequency band B in FIG. 5, a path 3 is used. The first signal includes, for example, a signal 1 and a signal 2. For example, the signal 1 and the signal 2 may be sent on different frequency bands, for example, sent on f1 and f3 respectively. Alternatively, the signal 1 and the signal 2 may be sent on non-contiguous carriers on a same frequency band, for example, sent on f3 and f4 respectively. Alternatively, the signal 1 and the signal 2 may be sent on contiguous carriers on a same frequency band, for example, sent on f1 and f2 respectively. Alternatively, the signal 1 and the signal 2 may be sent on a same carrier, for example, sent on f4 and f5 respectively.

Optionally, all or a part of signals included in the first signal may be used for positioning. For example, the first signal includes a positioning reference signal.

S403: The first device obtains the measurement information. The measurement information may be determined based on the first signal and the first information. Alternatively, S403 may be replaced with the following: The first device determines the measurement information based on the first signal and the first information.

For example, the first device may determine, based on the first information, phase information of a signal included in the first signal, and/or determine a difference between phases of signals included in the first signal. In a possible implementation, the first device may perform, based on the determined phase difference, phase compensation on a part or all of the signals included in the first signal, to obtain a measurement result of a high-bandwidth signal. For example, the high-bandwidth signal is referred to as a second signal, and a bandwidth of the second signal is close to (may be slightly less than, equal to, or slightly greater than) a sum of bandwidths of the signals included in the first signal.

For example, the first device may estimate a transmission delay from the second device to the first device based on the second signal, and the measurement information may include information about the transmission delay. Optionally, the transmission delay may be used by a UE for positioning.

For another example, the first device may perform channel estimation based on the second signal, and a channel is a channel through which the first signal sent by the second device (or a first signal received by the UE) passes. In a possible implementation, the first device obtains an accurate channel estimation result based on phase information of the first signal. The channel estimation result obtained by the first device may include one or more of the following: a channel parameter, a channel matrix, a channel fading matrix, a channel impulse response matrix, a multipath delay, energy of a cluster, or a distribution of channel parameter estimation results. Optionally, the channel estimation result may be used for communication or positioning.

The first device may position the UE. For example, the first device is a UE, and the second device is an access network device. In a possible implementation, there may be one or more access network devices participating in positioning the UE. For a signal of each access network device participating in the positioning, the UE performs the embodiment shown in FIG. 4, to obtain measurement information corresponding to each access network device. After obtaining a plurality of pieces of measurement information, the UE may position the UE based on the plurality of pieces of obtained measurement information. Alternatively, another device (for example, an LMF, an access network device, or another UE) may position the UE. For example, the first device may send the plurality of pieces of obtained measurement information to the another device (for example, the LMF, the access network device, or the another UE), and the another device positions the UE.

Alternatively, for example, the first device is an access network device, and the second device is a UE. In a possible implementation, there may be one or more access network devices participating in positioning the UE, and the one or more access network devices may obtain the measurement information according to the embodiment shown in FIG. 4. For example, one of the access network devices may receive the measurement information from another access network device in the plurality of access network devices, so that the one of the access network devices may obtain a plurality of pieces of measurement information. In this case, the access network device may position the UE based on the plurality of pieces of obtained measurement information. The access network device is, for example, a serving access network device of the UE or any access network device participating in the positioning. Alternatively, each access network device participating in the positioning may send the obtained measurement information to an LMF or another UE for positioning the UE.

Optionally, a positioning technology that may be used by a device (an access network device, a UE, an LMF, a calibration device, or the like) for positioning the UE is time of arrival (time of arrival, TOA) positioning, time difference of arrival (time difference of arrival, TDOA) positioning, uplink angle-of-arrival (uplink angle-of-arrival, UL-AoA) positioning, downlink angle of departure (downlink angle of departure, DL-AoD) positioning, multiple round trip time (multiple round trip time, multi-RTT) positioning, carrier phase positioning (carrier phase positioning), fusion positioning of some of these positioning methods, or the like. This is not limited.

In this embodiment of this application, the first information may include the phase information corresponding to the second device on the M resources. In this case, after receiving a signal on the one or more of the M resources, the first device may determine, based on the first information, phase information of the received signal, and the first device may further reduce or eliminate a phase difference in a corresponding manner, to improve accuracy of the obtained measurement information. For example, in an application scenario of the measurement information, the measurement information may be used to position second information, to improve positioning precision of the second device.

To resolve a same technical problem, an embodiment of this application provides a second communication method. FIG. 6 is a flowchart of the method.

S601: A second device sends first information. Correspondingly, a first device receives the first information. In this embodiment of this application, a third device and the second device are, for example, a same device.

The first information may include capability information of the second device on M resources. In other words, the first information includes capability information of the second device associated with the M resources, where M is a positive integer. Phase information of the second device on a resource can be determined based on capability information of the second device on the resource. The phase information of the second device on the resource may be understood as random phase information of the second device when the second device sends a signal on the resource, or may be understood as random phase information of the second device when the second device sends a signal on a path corresponding to the resource. For more content, refer to S401 in the embodiment shown in FIG. 4.

In this embodiment of this application, the first information may alternatively be implemented in a plurality of manners, which are described below by using examples.

1. Manner A

The M resources may belong to one or more resource combinations, and the first information may include capability information of the second device on a resource in at least one of the one or more resource combinations. A first resource in the M resources is used as an example. The first resource may be any one of the M resources, and the M resources include the first resource. The first resource belongs to a first resource combination. In this implementation, the first information may include capability information of the second device on the first resource in the first resource combination.

Optionally, when a resource combination is a frequency band combination, the first resource combination is a first frequency band combination. Because one frequency band combination may include one or more carriers, or include one or more frequency bands, the first resource may be one carrier or one frequency band. If the first resource is a frequency band, that the first information may include phase information of the second device on a part or all of frequency bands in at least one of one or more frequency band combinations may be understood as that the first information is reported at a granularity of per frequency band combination per frequency band (perBCperBand). Alternatively, if the first resource is a carrier, that the first information may include phase information of the second device on a part or all of carriers in at least one of one or more frequency band combinations may be understood that the first information is reported at a granularity of per frequency band combination per carrier (perBCperCC).

In Manner A, the first resource may belong to a plurality of resource combinations. In other words, in a plurality of resource combinations included in the M resources, two or more resource combinations all include the first resource. In this case, the first resource may correspond to a plurality of paths. As described above, the first resource may belong to the first resource combination. In an optional manner, if the first resource corresponds to the plurality of paths, the first resource belongs to the plurality of resource combinations. For example, the first resource belongs to the first resource combination and a second resource combination. In this case, the first information may include phase information of the second device on the first resource in the first resource combination and phase information of the second device on the first resource in the second resource combination. For more descriptions and other content, refer to S401 in the embodiment shown in FIG. 4.

For example, if the second device sends a signal on two non-contiguous carriers on a same frequency band, the signal may be sent through two paths. Different carriers may correspond to different paths, that is, different paths may be used for the non-contiguous carriers. For example, the CC 3 and the CC 4 in FIG. 1 are non-contiguous carriers belonging to the frequency band B, and the frequency band B belongs to two frequency band combinations, for example, the frequency band combination 1 and the frequency band combination 2. In this case, two cases may exist. For this, refer to S401 in the embodiment shown in FIG. 4.

If in the first case, capability information of the second device on non-contiguous carriers included in a same frequency band may be different. To notify the first device of all of capability information of the second device on the frequency band, the frequency band may be separately included in different frequency band combinations, and the frequency band may include different carriers in different frequency band combinations. In this way, the capability information of the second device on the non-contiguous carriers may be indicated to the first device. For example, the CC 3 and the CC 4 in FIG. 1 are non-contiguous carriers belonging to the frequency band B, and the frequency band B belongs to two frequency band combinations, for example, the frequency band combination 1 and the frequency band combination 2. For example, the frequency band B is the frequency band n41 in FIG. 2, the frequency band combination 1 is the BC 1 in FIG. 2, and the frequency band combination 2 is the BC 2 in FIG. 2. In a possible implementation, the frequency band B in the frequency band combination 1 includes the CC 3, for example, one of eight component carriers included in the frequency band n41 in the BC 1 in FIG. 2. The frequency band B in the frequency band combination 2 includes the CC 4, for example, one of four component carriers included in the frequency band n41 in the BC 2 in FIG. 2. The first information may indicate capability information of the second device on the frequency band B included in the frequency band combination 1. This is equivalent to indicating phase information of the second device on the CC 3. In addition, the first information may indicate capability information of the second device on the frequency band B included in the frequency band combination 2. This is equivalent to indicating capability information of the second device on the CC 4.

Optionally, the capability information of the second device on the first resource in the first resource combination may include one or more of the following: a quantity of resource elements corresponding to the first resource in the first resource combination, a frequency division coefficient corresponding to the second device on the first resource in the first resource combination, or a frequency range of the first resource in the first resource combination.

The quantity of resource elements corresponding to the first resource in the first resource combination may be understood as a quantity of paths used by the second device for sending a signal on the first resource in the first resource combination. For example, the first resource in the first resource combination corresponds to one or more resource elements, and a resource element is in one-to-one correspondence with a path. In other words, the second device corresponds to one or more paths on the first resource in the first resource combination. The resource element is, for example, a carrier, a carrier combination (for example, carriers corresponding to a same path in the first resource may belong to one carrier combination), a BWP, a BWP combination, or a frequency unit or a frequency unit combination whose granularity is less than that of a BWP. In this case, if the quantity of resource elements corresponding to the first resource in the first resource combination is P, the quantity of paths used by the second device for sending the signal on the first resource in the first resource combination is P, where P is a positive integer. The first device can determine, based on the quantity of resource elements, the quantity of paths used by the second device for sending the signal on the first resource in the first resource combination, and the first device can determine, based on the quantity of paths, a phase of the second device when the second device sends the signal on the first resource in the first resource combination. For example, if the quantity of paths used by the second device for sending the signal on the first resource in the first resource combination is 1, the first device can determine that a difference between phases of different signals received by the first device on the first resource in the first resource combination is 0. For another example, if the quantity of paths used by the second device for sending the signal on the first resource in the first resource combination is 4, the first device can determine that there are four possible absolute values of a difference between phases of two signals received by the first device on the first resource in the first resource combination, for example, 0°, 90°, 180°, and 270°, to assist the first device in determining measurement information.

The frequency division coefficient corresponding to the second device on the first resource in the first resource combination includes, for example, a frequency division coefficient associated with each path used by the second device for sending the signal on the first resource in the first resource combination. This reflects a frequency division capability of the second device on a path corresponding to the first resource in the first resource combination. For example, if the second device uses one path for sending the signal on the first resource in the first resource combination, the frequency division coefficient corresponding to the second device on the first resource in the first resource combination may include a frequency division coefficient of the path. For example, the frequency division coefficient of the path is 4, 8, or the like. If learning of a frequency division coefficient of a path, the first device can determine a phase value set (for example, if the frequency division coefficient of the path is 4, a phase value set corresponding to the path is {0°, 90°, 180°, 270°}) of a signal sent by the second device on the path. Therefore, a phase of a signal sent by the second device on the path can be determined.

The frequency range of the first resource in the first resource combination (in other words, a frequency range corresponding to the first resource in the first resource combination) includes, for example, a frequency range of each path used by the second device for sending the signal on the first resource in the first resource combination. For example, if a frequency range of a path used by the second device for sending the signal on the first resource in the first resource combination is 2.5 GHz to 3.5 GHz, the first device can determine that a difference between phases of signals sent by the second device within the frequency range is 0. For another example, a frequency range 1 of a path used by the second device for sending the signal on the first resource in the first resource combination is A, and a frequency range 2 of another path used by the second device for sending the signal on the first resource in the first resource combination is B. Optionally, a frequency range of the second device associated with the first resource in the first resource combination may further indicate a difference between a phase of the frequency range 1 and a phase of the frequency range 2. For example, the phase difference is C. In this case, a difference between phases of signals sent by the second device in the two frequency ranges is C. In this way, the first information may be used as a reference when a network configures a resource. For example, a to-be-sent signal (for example, a first signal) is configured on a frequency range associated with a same path as much as possible, to reduce complexity of a receive end.

2. Manner B

In some scenarios, the second device uses a same path on one or more frequency band combinations, the second device uses a same path on a frequency band regardless of a frequency band combination to which the frequency band belongs, or the second device uses a same path on a carrier regardless of a frequency band combination to which the carrier belongs. Therefore, Manner B is proposed.

That the first information may include capability information of the second device on at least one of the M resources may be understood as that the first information is reported at a granularity of per frequency band combination (perBC). For example, one of the M resources is a first resource, and the first information may include capability information of the second device on the first resource. Phase information of the second device when the second device sends a signal on a resource can be determined based on capability information of the second device on the resource. The phase information of the second device when the second device sends the signal on the resource is, for example, phase information of the second device when the second device sends a signal on a path corresponding to the resource.

Optionally, the first resource is, for example, a frequency band combination, the M resources are M frequency band combinations, and the first information may be reported at a granularity of per frequency band combination (perBC).

Alternatively, the first resource is, for example, a frequency band, the M resources are M frequency bands, and the first information may be reported at a granularity of per frequency band (perBand). Alternatively, the first resource is a carrier, the M resources are M carriers, and the first information may be reported at a granularity of per carrier (perCC). Manner B is simple, and transmission overheads caused by the first information can be reduced.

Optionally, the capability information of the second device on the first resource may include one or more of the following: a quantity of resource elements corresponding to the first resource, a frequency division coefficient corresponding to the second device on the first resource, or a frequency range of the first resource.

The quantity of resource elements corresponding to the first resource may be understood as a quantity of paths used by the second device for sending a signal on the first resource. For example, the first resource corresponds to one or more resource elements, and a resource element is in one-to-one correspondence with a path. For descriptions of the resource element, refer to S401 in the embodiment shown in FIG. 4. In this case, if the quantity of resource elements corresponding to the first resource is P, the quantity of paths used by the second device for sending the signal on the first resource is P, where P is a positive integer. The first device can determine, based on the quantity of resource elements, the quantity of paths used by the second device for sending the signal on the first resource, and the first device can determine, based on the quantity of paths, a phase of the second device when the second device sends the signal on the first resource.

The frequency division coefficient corresponding to the second device on the first resource includes, for example, a frequency division coefficient associated with each path used by the second device for sending the signal on the first resource. This reflects a frequency division capability of the second device on the path. For this, refer to the descriptions of the first implementation.

A frequency range of a first resource unit includes, for example, a frequency range of each path used by the second device for sending a signal on the first resource unit. For this, refer to the descriptions of Manner A.

3. Manner C

For example, if one of the M resources is one resource set, the M resources may be M resource sets.

Optionally, the resource set is a carrier set, and one resource set may include one or more carriers. For more descriptions, refer to S401 in the embodiment shown in FIG. 4.

Optionally, in this implementation, the first information may include capability information of the second device on at least one of the M resource sets. Phase information of the second device when the second device sends a signal on a resource set can be determined based on capability information of the second device on the resource set. The phase information of the second device when the second device sends the signal on the resource set is, for example, phase information of the second device when the second device sends a signal on a path corresponding to the resource set. For example, when the second device sends signals on different carriers included in one resource set, a same path is used; or when the second device sends signals on different resource sets, different paths are used. In other words, a resource set is in one-to-one correspondence with a path.

Optionally, in this implementation, for example, the M resources include a first resource, the first resource is any one of the M resources, and the first resource may be a resource set, for example, referred to as a first resource set. For the first resource set, the first information may include one or more of the following: a quantity of resource elements corresponding to the first resource set, a frequency division coefficient corresponding to the second device on the first resource set, or a frequency range of the first resource set.

The quantity of resource elements corresponding to the first resource set may be understood as a quantity of paths used by the second device for sending a signal on the first resource set. For example, the first resource set includes one or more resource elements, and a resource element is in one-to-one correspondence with a path. For descriptions of the resource element, refer to S401 in the embodiment shown in FIG. 4. In this case, if the quantity of resource elements corresponding to the first resource set is P, the quantity of paths used by the second device for sending the signal on the first resource set is P, where P is a positive integer. The first device can determine, based on the quantity of resource elements, the quantity of paths used by the second device for sending the signal on the first resource set, and the first device can determine, based on the quantity of paths, a phase of the second device when the second device sends the signal on the first resource set.

The frequency division coefficient corresponding to the second device on the first resource set includes, for example, a frequency division coefficient associated with a path used by the second device for sending the signal on the first resource set. This reflects a frequency division capability of the second device on the path. For this, refer to the descriptions of the first implementation.

The frequency range of the first resource set is, for example, a frequency range of a path used by the second device for sending a signal on a first resource unit. For this, refer to the descriptions of Manner A.

4. Manner D

In some scenarios, one device may use a same path. In other words, for the device, a same path is used regardless of a resource on which a signal is sent. Therefore, Manner D is proposed.

The first information may include capability information of the second device, and the capability information is applicable to at least one of the M resources. Phase information of the second device when the second device sends a signal can be determined based on the capability information of the second device, and the phase information is applicable to the at least one resource. In other words, the second device sends a signal on any one or more of the at least one resource, and phase information of the signal is phase information indicated by the capability information of the second device. For example, in this case, the first information only needs to indicate the capability information of the device. Therefore, transmission overheads of the first information can be reduced, and an indication manner can be simplified.

Optionally, the first information may be included in the capability information of the second device, and a message carrier of the capability information is, for example, an LPP provide capability (LPP ProvideCapabilities) message or a UE capability information (UECapabilityInformation) message. The capability information may be referred to as capability information A, for example, total capability information of the second device. For example, if the second device is a UE, the first device is an LMF, and the capability information A is carried in the LPP provide capability message, the UE may add the first information to the LPP provide capability message and send the LPP provide capability message to the LMF. For example, if the second device is a UE, and the first device is an access network device, the UE may add the first information to a UE capability information message and send the UE capability information message to the access network device, and does not need to additionally send the first information to the access network device. In this way, signaling overheads are reduced. In this embodiment of this application, because the first information may be included in the capability information A of the second device, it is considered that the first information includes the capability information of the second device on the M resources. The following uses Manner A and the UE capability information message as an example to describe a manner in which the first information is included in the UE capability information message of the second device.

An example in which the UE capability information message of the second device is reported in the manner shown in FIG. 2 is used. For example, if carriers participating in carrier aggregation are the CC 1 on the frequency band n41 and the CC 2 on the frequency band n78, the first information may include capability information of the second device on the frequency band n41 in the BC 2, and capability information of the second device on the frequency band n78 in the BC 2. For example, in FIG. 2, capability information corresponding to the feature set uplink ID 2 included in the feature set 2 corresponding to the frequency band n41 may include the capability information of the second device on the frequency band n41 in the BC 2, in other words, indicates phase information of the second device on the CC 1 on the frequency band n41. Capability information corresponding to the feature set uplink ID 2 included in the feature set 2 corresponding to the frequency band n78 may include the capability information of the second device on the frequency band n78 in the BC 2, in other words, includes capability information of the second device on the CC 2 on the frequency band n78.

Then, the following uses Manner B and the UE capability information message as an example to describe a manner in which the first information is included in the UE capability information message of the second device.

An example in which the UE capability information message of the second device is reported in the manner shown in FIG. 2 is still used. For example, if carriers participating in carrier aggregation are the CC 1 on the frequency band n41 and the CC 2 on the frequency band n78, the first information may include capability information of the second device on the CC 1 included in the frequency band n41 in the BC 2, and capability information of the second device on the CC 2 included in the frequency band n78 in the BC 2. For example, in FIG. 2, capability information corresponding to a feature set per component carrier ID 1 corresponding to the feature set uplink ID 2 included in the feature set 2 corresponding to the frequency band n41 may include the capability information of the second device on the CC 1 included in the frequency band n41 in the BC 2. Capability information corresponding to a feature set per component carrier ID 1 corresponding to the feature set uplink ID 2 included in the feature set 2 corresponding to the frequency band n78 may include the capability information of the second device on the CC 2 included in the frequency band n78 in the BC 2.

S602: The second device sends the first signal on one or more of the M resources. Correspondingly, the first device receives the first signal from the second device on the one or more of the M resources.

For more content of S602, refer to S402 in the embodiment shown in FIG. 4.

S603: The first device obtains the measurement information. The measurement information may be determined based on the first signal and the first information. Alternatively, S603 may be replaced with the following: The first device determines the measurement information based on the first signal and the first information.

For example, FIG. 7 is a diagram of a positioning process. For example, the first signal includes two signals, and the first information indicates a frequency division coefficient of a path used by the second device for sending the two signals. For example, the first information indicates that a frequency division coefficient N1 of a path 1 is 4, and a frequency division coefficient N2 of a path 2 is also 4. A signal 1 and a signal 2 included in the first signal are respectively sent on a frequency band 1 and a frequency band 2, and bandwidths of the two signals are both 100 MHz. Based on this, the first device determines that a phase value set of each of the two signals sent by the second device is {0°, 90°, 180°, 270°}. In this case, a value set of an absolute value of a difference between phases of the two signals is {0°, 90°, 180°, 270°}. For example, the first device may separately perform phase compensation by using the four phase differences, and perform related processing on a local signal and high-bandwidth signals obtained through splicing after the phase compensation. If a ratio of a first peak to a second peak in related peaks obtained through related processing on the local signal and one of the high-bandwidth signals is the largest, it indicates that a phase difference corresponding to the high-bandwidth signal is a difference between actual phases of the signal 1 and the signal 2. The first device performs phase compensation on the signal 1 and/or the signal 2 based on the actual phase difference, so that a UE can be positioned based on the high-bandwidth signal obtained through splicing after the phase compensation. The UE is, for example, the first device or the second device.

For more content of S603, refer to S403 in the embodiment shown in FIG. 4.

In this embodiment of this application, the first information may include the capability information of the second device on the M resources. In this case, after receiving a signal on the one or more of the M resources, the first device may determine phase information of the received signal based on the first information, so that the phase information of the received signal is considered when the measurement information is obtained. For example, a difference between phases of different signals may be reduced or eliminated in a corresponding manner, to improve accuracy of the obtained measurement information. For example, an application scenario of the measurement information is that the measurement information may be used to position the second device. In this case, the phase information of the received signal is estimated, so that impact of the phase information on positioning precision can be reduced, thereby improving the positioning precision of the second device.

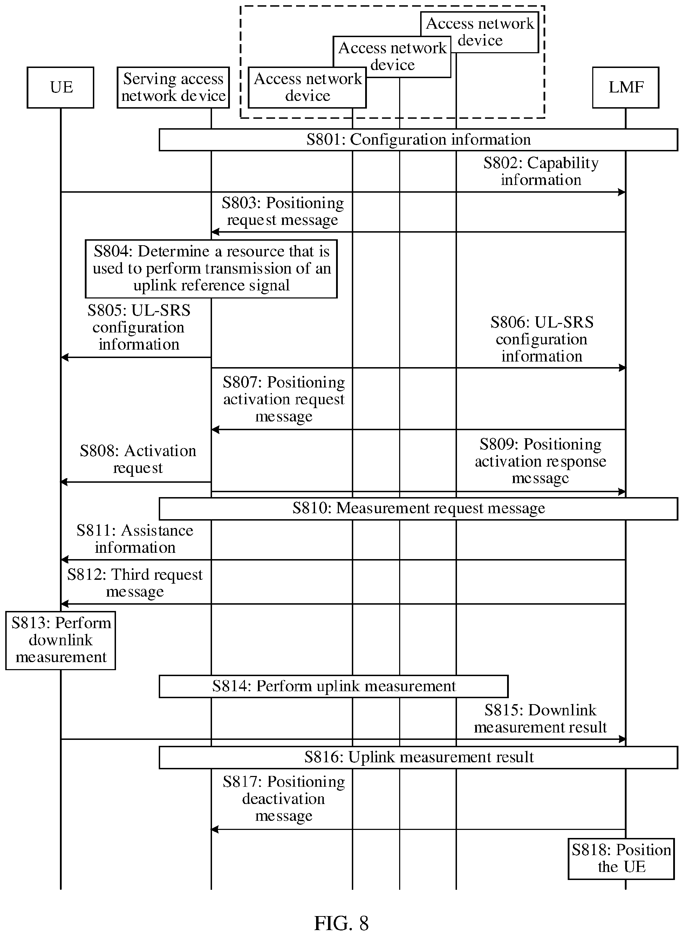

Next, an application scenario of the embodiment shown in FIG. 4 or FIG. 6 is described by using Uu positioning as an example. For sidelink positioning, an access network device in the following procedure may be replaced with a terminal node. The terminal node includes, for example, a UE or a road side unit (road side unit, RSU). In addition, a related message carrier may also be changed accordingly. FIG. 8 is a flowchart of another communication method according to an embodiment of this application, and is also an application manner of the embodiment shown in FIG. 4 or FIG. 6. Therefore, for content that is not described in detail in the embodiment shown in FIG. 8, for example, an implementation of the first information, refer to the descriptions of the embodiment shown in FIG. 4 or FIG. 6. In the embodiment shown in FIG. 8, an example in which a first device is a UE and an uplink and downlink joint positioning process is used is used for description. A second device and a third device may be a same device or different devices.

S801: An LMF requests configuration information from an access network device. Correspondingly, the access network device sends the configuration information to the LMF. S801 may be performed between the LMF and all access network devices participating in current positioning. The access network devices participating in the current positioning may include a serving access network device of a to-be-positioned UE, and may further include one or more access network devices adjacent to the serving access network device. In FIG. 8, an example in which a quantity of access network devices participating in positioning is 3 is used for description.

For example, the LMF may exchange configuration information with each access network device by using an NRPPa message. The configuration information may include configuration information of a reference signal. The reference signal includes, for example, a downlink reference signal in a positioning reference signal, and/or further includes another downlink reference signal. For example, the LMF may send a first request message to each access network device by using a TRP information request (TRP information request) message, where the first request message may be used to request the configuration information. Each access network device may send the configuration information to the LMF by using a TRP information response (TRP information response) message.

Optionally, if to-be-transmitted first information includes first information of the access network device or the UE, in addition to requesting the configuration information from the access network device, the LMF may further request first information of the access network device. Correspondingly, in addition to sending the configuration information to the LMF, the access network device may further send the first information of the access network device. The first information of the access network device may include phase information of the access network device when the access network device sends a signal on the M resources. The first request message may be used to request the configuration information and the first information of the access network device, or the first request message may be used to request the configuration information. In addition, the LMF further sends a second request message to the access network device, where the second request message may be used to request the first information of the access network device. For a manner of sending the second request message, refer to a manner of sending the first request message. For the access network device, for example, the configuration information and the first information of the access network device are carried in a same message for sending, or may be carried in different messages for sending. If the configuration information and the first information of the access network device are carried in the different messages for sending, for a manner in which the access network device sends the first information of the access network device to the LMF, refer to a manner of sending the configuration information.

Optionally, the access network device may further send the first information of the access network device to the UE by using RRC signaling or another message.

S802: The UE sends capability information of the UE to the LMF. Correspondingly, the LMF receives the capability information from the UE. For example, an LPP capability transfer (LPP capability transfer) process is performed between the LMF and the UE, so that the UE can send the capability information to the LMF. A message carrier of the capability information that is of the UE and that is transmitted in S802 may be an LPP message, for example, an LPP provide capability (LPP ProvideCapabilities) message. For example, the message may be a common provide positioning capability message such as a common information element provide capability (CommonIEsProvideCapabilities) message, a provide capability message of a specific positioning method, for example, an uplink provide capability (UL-ProvideCapabilities) message, an uplink TDOA provide capability (UL-TDOA-ProvideCapabilities) message, or a multi round trip time provide capability (Multi-RTT-ProvideCapabilities) message, or another message. This is not limited in this embodiment of this application.

Optionally, the capability information sent by the UE in S802 may include first information of the UE. The capability information in S802 may include all or a part of the first information of the UE, or include a result obtained through adjustment or modification on the first information of the UE. In addition, optionally, the UE may further send the first information of the UE to the access network device by using RRC signaling or another message.

Optionally, the LMF requests the first information from the UE, and a message carrier of the first information may be an LPP message, for example, an LPP request capability (LPP RequestCapabilities) information message. For example, the message may be a common request positioning capability message such as CommonIEsRequestCapabilities, a capability request message of a specific positioning method, for example, an uplink request capability (UL-RequestCapabilities) message, an uplink TDOA request capability (UL-TDOA-RequestCapabilities) message, or a multi round trip time request capability (Multi-RTT-RequestCapabilities), or another message. This is not limited in this embodiment of this application.

S803: The LMF sends a positioning request message to the serving access network device. Correspondingly, the serving access network device receives the positioning request message from the LMF. For example, the positioning request message is an NRPPa positioning information request (NRPPa positioning information request) message. An NRPPa positioning information request may be used to request uplink information of the to-be-positioned UE, for example, UL-SRS configuration information.

S804: The serving access network device determines a resource that may be used to perform transmission of an uplink reference signal.

S805: The serving access network device sends the UL-SRS configuration information to the UE. Correspondingly, the UE receives the UL-SRS configuration information from the serving access network device.

S806: The serving access network device sends the UL-SRS configuration information to the LMF. Correspondingly, the LMF receives the UL-SRS configuration information from the serving access network device.

For example, the serving access network device may send the UL-SRS configuration information to the LMF by using an NRPPa positioning information response (NRPPa positioning information response) message.

S807: The LMF sends a positioning activation request message to the serving access network device. Correspondingly, the serving access network device receives the positioning activation request message from the LMF. The positioning activation request message is, for example, an NRPPa positioning activation request (NRPPa positioning activation request) message.

If an SRS is configured as semi-persistent scheduling (semi-persistent scheduling, SPS) or aperiodic transmission, the LMF may send the NRPPa positioning activation request message to the serving access network device, to request to activate SRS transmission of the UE. However, if an SRS is configured as periodic transmission, S807 may not need to be performed.

S808: The serving access network device sends an activation request to the UE. Correspondingly, the UE receives the activation request from the serving access network device. The activation request may be used to request to activate the SRS transmission of the UE.

After receiving the activation request, the UE may send the SRS based on the UL-SRS configuration information.

S809: The serving access network device sends a positioning activation response message to the LMF. Correspondingly, the LMF receives the positioning activation response message from the serving access network device. The positioning activation response message is a response to the positioning activation request message in S807. For example, the positioning activation response message is an NRPPa positioning activation response (NRPPa positioning activation response) message.

S810: The LMF sends a measurement request message to the access network device, where the measurement request message may include first measurement information. Correspondingly, the access network device receives the measurement request message from the LMF. The first measurement information may include information needed by the access network device to perform uplink measurement. The access network device includes, for example, all the access network devices participating in the positioning.

For example, the LMF may send the first measurement information to the access network device by using an NRPPa measurement request (NRPPa measurement request) message. The first measurement information is different from the measurement information in the embodiment shown in FIG. 4 or FIG. 6.

Optionally, in S810, the LMF may send a part or all of the first information or the capability information of the UE to the access network device; or adjust or modify the first information, and send, to the access network device, adjusted or modified first information. For example, the LMF may add a part or all of the first information to one message (for example, an NRPPa measurement request message) and send the message to the access network device, or may separately send a part or all of the first information to the access network device by using different messages.

S811: The LMF sends assistance information to the UE. Correspondingly, the UE receives the assistance information from the LMF. The assistance information may include information needed by the UE to perform downlink measurement.

Optionally, the assistance information may include the first information of the access network device. For example, the LMF may send the part or all of the first information to the UE; or adjust or modify the first information, and send, to the UE, adjusted or modified first information. For example, the LMF may add the assistance information and the part or all of the first information to one message (for example, an LPP provide assistance data message) and send the message to the UE, or may separately send the assistance information and the part or all of the first information to the UE by using different messages.

Alternatively, the UE may obtain the first information of the access network device in another manner. For example, a calibration device may send the first information of the access network device to the UE. If the calibration device is an access network device, the calibration device may send the first information of the access network device to the UE by using an RRC message. Alternatively, if the calibration device is a UE, the calibration device may send the first information of the access network device to the UE by using an SL message.

A message carrier of the assistance information may be an LPP message, for example, an LPP provide assistance data (LPP ProvideAssistanceData) message. For example, the message may be a common provide assistance data message such as a common information element provide assistance data (CommonIEsProvideAssistanceData) message, a provide capability message of a specific positioning method, for example, a downlink TDOA provide assistance data (DL-TDOA-ProvideAssistanceData) message, a downlink AoD provide assistance data (DL-AoD-ProvideAssistanceData) message, or a multi round trip time provide assistance data (Multi-RTT-ProvideAssistanceData) message, or another message. This is not limited in this embodiment of this application.

Optionally, the UE requests the first information of the access network device from the LMF, and a message carrier of the first information may be an LPP message, for example, an LPP request assistance data (LPP RequestAssistanceData) message.

S812: The LMF sends a third request message to the UE. Correspondingly, the UE receives the third request message from the LMF. The third request message may be used to carry the first information of the access network device or used to request the first information of the UE. The third request message is, for example, an LPP request location information (LPP RequestLocationInformation) message. For example, the message may be a common request location information message such as a common information element request location information (CommonIEsRequestLocationInformation) message, a provide capability message of a specific positioning method, for example, a downlink TDOA request location information (DL-TDOA-RequestLocationInformation) message, a downlink AoD request location information (DL-AoD-RequestLocationInformation) message, or a multi round trip time request location information (Multi-RTT-RequestLocationInformation) message, or another message. This is not limited in this embodiment of this application.

Optionally, the first information that is of the UE and that is obtained by the LMF in S812 may include phase information of the UE on the M resources.

S813: The UE performs the downlink measurement. All or a part of the access network devices participating in the positioning may send a downlink reference signal, for example, a DL-PRS, a channel state information reference signal (channel state information reference signal, CSI-RS), or a synchronization signal and physical broadcast channel (physical broadcast channel, PBCH) block (synchronization signal and PBCH block, SSB), and the UE may measure the received downlink reference signal.

The UE may obtain a measurement result by using the first information of the access network device.

S814: The access network device performs the uplink measurement. The UE may send an uplink reference signal, for example, an SRS, and all or a part of the access network devices participating in the positioning can receive the SRS, to perform the uplink measurement.

An access network device may obtain a measurement result by using the first information of the UE.

S815: The UE sends the downlink measurement result to the LMF. Correspondingly, the LMF receives the downlink measurement result from the UE. For example, the UE may send the downlink measurement result to the LMF by using an LPP message, for example, by using an LPP provide location information (LPP provide location information) message.

Optionally, in S815, the UE may send the first information of the UE to the LMF. For example, the UE may add the downlink measurement result and the first information of the UE to one message (for example, an LPP provide location information message) and send the message to the LMF, or may separately send the downlink measurement result and the first information of the UE to the LMF by using different messages. The first information that is of the UE and that is obtained by the LMF in S812 may include the phase information of the second device on the M resources. The first information sent by the UE to the LMF may be all or a part of the first information obtained by the UE; or the UE may adjust or modify the obtained first information, and send, to the LMF, adjusted or modified first information.

S816: The access network device sends the uplink measurement result to the LMF. Correspondingly, the LMF receives the uplink measurement result from the access network device. Any access network device that obtains the uplink measurement result may perform S816. For example, the access network device may send the uplink measurement result to the LMF by using an NRPPa measurement response (NRPPa measurement response) message.

S817: The LMF sends a positioning deactivation message to the serving access network device. Correspondingly, the serving access network device receives the positioning deactivation message from the LMF. The positioning deactivation message is a response to the positioning activation request message in S807. For example, the positioning deactivation message is an NRPPa positioning deactivation (NRPPa positioning deactivation) message. After receiving the positioning deactivation message, the serving access network device may send a deactivation request to the UE. After receiving the deactivation request, the UE may stop sending the SRS.

S818: The LMF positions the UE.

After obtaining the downlink measurement result and the uplink measurement result, the LMF may position the UE based on the downlink measurement result and the uplink measurement result. For example, the LMF may determine a location of the UE based on the downlink measurement result and the uplink measurement result, or optionally, may determine a location of the UE based on the first information of the access network device and/or the first information of the UE.

The embodiment shown in FIG. 8 is merely an application scenario of the embodiment shown in FIG. 4 or FIG. 6. In addition, the embodiment shown in FIG. 4 or FIG. 6 may further have another application scenario, for example, may be applied to another positioning scenario, or another communication scenario other than positioning. This is not limited in embodiments of this application.

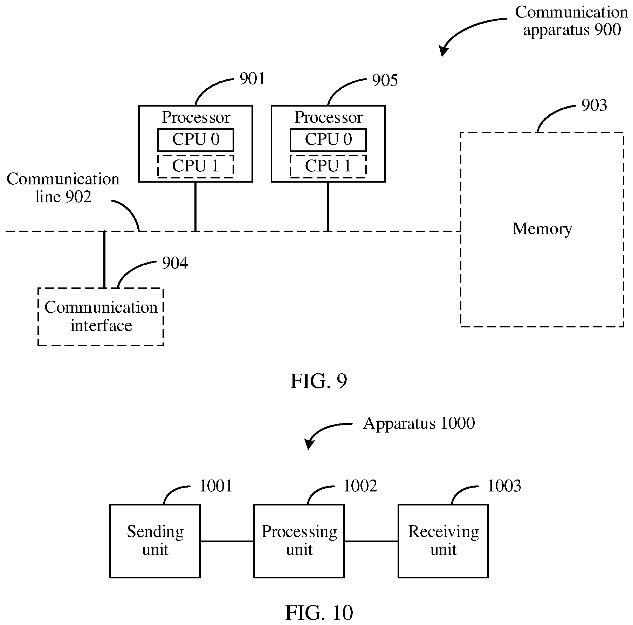

FIG. 9 is a diagram of a structure of a communication apparatus according to an embodiment of this application. The communication apparatus 900 may be the first device in the embodiment shown in any one of FIG. 4, FIG. 6, or FIG. 8 or a circuit system of the first device, and is configured to implement the method corresponding to the first device in the foregoing method embodiment. Alternatively, the communication apparatus 900 may be the third device in the embodiment shown in any one of FIG. 4, FIG. 6, or FIG. 8 or a circuit system of the third device, and is configured to implement specific functions of the method corresponding to the third device in the foregoing method embodiment. Refer to the descriptions in the foregoing method embodiment. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 900 by an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general central processing unit (central processing unit, CPU), a microprocessor, an application-specific integrated circuit (application-specific integrated circuit, ASIC), or one or more integrated circuits configured to control program execution of the solutions of this application.

The communication line 902 may include a path for performing transmission of information between the foregoing components.

The communication interface 904 uses any transceiver-type apparatus, to communicate with another device or a communication network such as an Ethernet, a radio access network (radio access network, RAN), a wireless local area network (wireless local area network, WLAN), or a wired access network.

The memory 903 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer. However, the memory 903 is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions of this application, and the processor 901 controls execution. The processor 901 is configured to execute the computer-executable instructions stored in the memory 903, to implement the paging method in embodiments of this application.

Optionally, the computer-executable instructions in this embodiment of this application may also be referred to as application program code. This is not specifically limited in this embodiment of this application.

In specific implementation, in an embodiment, the processor 901 may include one or more CPUs such as a CPU 0 and a CPU 1 in FIG. 9.

In specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip (or a chip system), for example, a chip of the first device or a chip of the third device, the chip includes the processor 901 (and may further include the processor 905), the communication line 902, the memory 903, and the communication interface 904. Specifically, the communication interface 904 may be an input interface, a pin, a circuit, or the like. The memory 903 may be a register, a cache, or the like. The processor 901 and the processor 905 may be a general-purpose CPU, a microprocessor, an ASIC, or one or more integrated circuits configured to control program execution of the paging method in the foregoing embodiments.

In embodiments of this application, the apparatus may be divided into functional modules based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. For example, when each functional module is obtained through division based on each corresponding function, FIG. 10 is a diagram of an apparatus. The apparatus 1000 may be the first device or the third device in the foregoing method embodiments, or a chip in the first device or a chip in the third device. The apparatus 1000 includes a sending unit 1001 (or referred to as a sending module 1001), a processing unit 1002 (or referred to as a processing module 1002), and a receiving unit 1003 (or referred to as a receiving module 1003). The sending unit 1001 and the receiving unit 1003 may belong to a transceiver unit (or referred to as a transceiver module), and the transceiver unit can implement a sending function and a receiving function. When implementing the sending function, the transceiver unit may be referred to as the sending unit 1001. When implementing the receiving function, the transceiver unit may be referred to as the receiving unit 1003. Optionally, the sending unit 1001 and the receiving unit 1003 may be a same functional module, the functional module is referred to as a transceiver unit, and the transceiver unit can implement the sending function and the receiving function. Alternatively, the sending unit 1001 and the receiving unit 1003 may be different functional modules, and the transceiver unit is a general term for these functional modules.

It should be understood that the apparatus 1000 may be configured to implement the steps performed by the first device or the third device in the method in embodiments of this application. For related features, refer to the foregoing embodiments. Details are not described herein again.

Optionally, functions/implementation processes of the sending unit 1001, the receiving unit 1003, and the processing unit 1002 in FIG. 10 may be implemented by the processor 901 and/or the processor 905 in FIG. 9 by invoking computer-executable instructions stored in the memory 903. Alternatively, a function/an implementation process of the processing unit 1002 in FIG. 10 may be implemented by the processor 901 and/or the processor 905 in FIG. 9 by invoking the computer-executable instructions stored in the memory 903, and functions/implementation processes of the sending unit 1001 and the receiving unit 1003 in FIG. 10 may be implemented through the communication interface 904 in FIG. 9.

Optionally, when the apparatus 1000 is a chip or a circuit, functions/implementation processes of the sending unit 1001 and the receiving unit 1003 may be further implemented through a pin, a circuit, or the like.

This application further provides a computer-readable storage medium. The computer-readable storage medium stores a computer program or instructions. When the computer program or the instructions are run, the method performed by the first device or the third device in the foregoing method embodiments is implemented. In this way, the function in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first device or the third device in any one of the foregoing method embodiments.

An embodiment of this application further provides a processing apparatus, including a processor and an interface. The processor is configured to perform the method performed by the first device or the third device in any one of the foregoing method embodiments.

All or some of the foregoing embodiments may be implemented by software, hardware, firmware, or any combination thereof. When the software is used to implement embodiments, all or some embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or a design of any combination of the foregoing devices. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or a storage medium in any other form in the art. For example, the storage medium may be connected to the processor, so that the processor may read information from the storage medium and write information into the storage medium. Optionally, the storage medium may be integrated into the processor. The processor and the storage medium may be disposed in an ASIC, and the ASIC may be disposed in a terminal device. Optionally, the processor and the storage medium may be disposed in different components of a terminal device.

These computer program instructions may also be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. It is clear that a person skilled in the art may make various modifications and variations to embodiments of this application without departing from the scope of embodiments of this application. In this way, embodiments of this application are intended to cover these modifications and variations provided that they fall within the scope of the claims of embodiments of this application and equivalent technologies thereof.

**Claims**

1.  A communication method, applied to a first device, wherein the method comprises:

    receiving first information, wherein the first information comprises phase information of a second device on M resources, the M resources are frequency resources, and M is a positive integer;
    receiving a first signal on one or more of the M resources; and
    obtaining measurement information, wherein the measurement information is determined based on the first signal and the first information.

2.  The method according to claim 1, wherein a first resource in the M resources belongs to a first resource combination, and the first information comprises phase information of the second device on the first resource in the first resource combination.

3.  The method according to claim 2, wherein the phase information of the second device on the first resource in the first resource combination comprises one or more of the following:

    a phase of the second device on the first resource in the first resource combination;
    a quantity of phases of the second device on the first resource in the first resource combination;
    a phase value set of the second device on the first resource in the first resource combination;
    a phase value range of the second device on the first resource in the first resource combination;
    phase error information of the second device on the first resource in the first resource combination;
    a difference between a phase of the second device on a second resource and a phase of the second device on the first resource in the first resource combination, wherein the second resource is any resource other than the first resource in the M first resources; or
    a difference between a reference phase and a phase of the second device on the first resource in the first resource combination.

4.  The method according to claim 2 or 3, wherein the difference between the phase of the second device on the second resource and the phase of the second device on the first resource in the first resource combination is not 0.

5.  The method according to claim 3 or 4, wherein the second resource belongs to a second resource combination, and the second resource combination and the first resource combination are a same resource combination or different resource combinations.

6.  The method according to any one of claims 2 to 5, wherein the first resource combination is one or more frequency band combinations.

7.  The method according to any one of claims 2 to 6, wherein the first resource is one or more frequency bands or one or more carriers.

8.  The method according to claim 1, wherein a first resource in the M resources is a resource set.

9.  The method according to claim 8, wherein the resource set is a carrier set.

10. The method according to claim 1, wherein a first resource in the M resources is a frequency band combination, a frequency band, or a carrier.

11. The method according to any one of claims 1 to 10, wherein the measurement information is used for positioning.

12. The method according to any one of claims 1 to 11, wherein the first information is carried in capability information.

13. A communication method, applied to a third device, wherein the method comprises:

obtaining first information, wherein the first information comprises phase information of a second device on M resources, the M resources are frequency resources, and M is a positive integer; and

sending the first information.

14. The method according to claim 13, wherein a first resource in the M resources belongs to a first resource combination, and the first information comprises phase information of the second device on the first resource in the first resource combination.

15. The method according to claim 14, wherein the phase information of the second device on the first resource in the first resource combination comprises one or more of the following:

a phase of the second device on the first resource in the first resource combination;

a quantity of phases of the second device on the first resource in the first resource combination;

a phase value set or a phase value range of the second device on the first resource in the first resource combination;

phase error information of the second device on the first resource in the first resource combination;

a difference between a phase of the second device on a second resource and a phase of the second device on the first resource in the first resource combination, wherein the second resource is any resource other than the first resource in the M resources; or

a difference between a reference phase and a phase corresponding to the second device on the first resource in the first resource combination.

16. The method according to claim 14 or 15, wherein the difference between the phase of the second device on the second resource and the phase of the second device on the first resource in the first resource combination is not 0.

17. The method according to claim 15 or 16, wherein the second resource belongs to a second resource combination, or the second resource belongs to the first resource combination.

18. The method according to any one of claims 14 to 17, wherein the first resource combination is one or more frequency band combinations.

19. The method according to any one of claims 14 to 18, wherein the first resource is one or more frequency bands or one or more carriers.

20. The method according to claim 13, wherein a first resource in the M resources is a resource set.

21. The method according to claim 20, wherein the resource set is a carrier set.

22. The method according to claim 13, wherein a first resource in the M first resources is a frequency band combination, a frequency band, or a carrier.

23. The method according to any one of claims 13 to 22, wherein the method further comprises:
sending a first signal on one or more of the M resources.

24. The method according to any one of claims 13 to 23, wherein the first signal is used for positioning.

25. A communication apparatus, comprising a processor and a memory, wherein the memory is coupled to the processor, and the processor is configured to perform the method according to any one of claims 1 to 12, or is configured to perform the method according to any one of claims 13 to 24.

26. A computer-readable storage medium, wherein the computer-readable storage medium is configured to store a computer program; and when the computer program is run on a computer, the computer is enabled to perform the method according to any one of claims 1 to 12, or the computer is enabled to perform the method according to any one of claims 13 to 24.

27. A chip system, wherein the chip system comprises:
a processor and an interface, wherein the processor is configured to: invoke instructions from the interface and run the instructions, and when executing the instructions, the processor implements the method according to any one of claims 1 to 12, or implements the method according to any one of claims 13 to 24.

28. A computer program product, wherein the computer program product comprises a computer program, and when the computer program is run on a computer, the computer is enabled to perform the method according to any one of claims 1 to 12, or the computer is enabled to perform the method according to any one of claims 13 to 24.

CC 1 | CC 2

Frequency band A

CC 3

CC 4

Frequency band B

FIG. 1

EP 4 529 233 A1

FIG. 2

FIG. 3

FIG. 4

Frequency band A

f1    f2

CC 1 | CC 2

Path 1

Frequency band B

f3    f4  f5

CC 3 | CC 4

Path 2 | Path 3

FIG. 5

Second device

First device

S601: First information, including capability information of the second device on M resources

S602: First signal (sent on one or more of the M resources)

S603: Obtain measurement information, where the measurement information is determined based on the first signal and the first information

FIG. 6

Frequency band 1

Signal 1 (100 MHz) N1=4

High-bandwidth sampling

Perform phase compensation by using N1 and N2

Splicing

Positioning

Frequency band 2

Signal 2 (100 MHz) N2=4

Second device

First device

FIG. 7

FIG. 8

EP 4 529 233 A1

Communication
apparatus 900

901    905    903

Processor    Processor
CPU 0        CPU 0
CPU 1        CPU 1

Communication
line 902

Memory

904

Communication
interface

FIG. 9

Apparatus 1000

1001    1002    1003

Sending
unit     Processing
unit     Receiving
unit

FIG. 10

39

## INTERNATIONAL SEARCH REPORT

International application No.

**PCT/CN2023/093756**

### A. CLASSIFICATION OF SUBJECT MATTER

H04W4/02(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, DWPI, CNKI: 定位, 相位, 载波, 资源, 组合, 参考信号, 频带, 测量, position+, phase, carrier, CA, CC, RS, PRS, band, measur+

### C. DOCUMENTS CONSIDERED TO BE RELEVANT

| Category* | Citation of document, with indication, where appropriate, of the relevant passages | Relevant to claim No. |
|---|---|---|
| PX | CN 114727221 A (HUAWEI TECHNOLOGIES CO., LTD.) 08 July 2022 (2022-07-08) description, paragraphs [0005]-[0209] | 1-28 |
| X | WO 2022063261 A1 (HUAWEI TECHNOLOGIES CO., LTD.) 31 March 2022 (2022-03-31) claims 99-105, and description, pages 15-24 | 1-28 |
| A | CN 110089080 A (FRAUNHOFER-GESELLSCHAFT ZUR FÖRDERUNG DER ANGEWANDTEN FORSCHUNG E. V.) 02 August 2019 (2019-08-02) entire document | 1-28 |
| A | CN 111869156 A (BEIJING XIAOMI MOBILE SOFTWARE CO., LTD.) 30 October 2020 (2020-10-30) entire document | 1-28 |
| A | CATT. "Discussion of NR positioning enhancements" *3GPP TSG RAN WG1 Meeting #101 R1-2003642,* 05 June 2020 (2020-06-05), entire document | 1-28 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 July 2023** | **20 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/093756**

| Patent document cited in search report | | | Publication date (day/month/year) | Patent family member(s) | | | Publication date (day/month/year) |
|---|---|---|---|---|---|---|---|
| CN | 114727221 | A | 08 July 2022 | None | | | |
| WO | 2022063261 | A1 | 31 March 2022 | CN | 114286444 | A | 05 April 2022 |
| CN | 110089080 | A | 02 August 2019 | EP | 3533190 | A1 | 04 September 2019 |
| | | | | US | 2019253282 | A1 | 15 August 2019 |
| | | | | EP | 3800847 | A1 | 07 April 2021 |
| | | | | WO | 2018078119 | A1 | 03 May 2018 |
| | | | | EP | 3316534 | A1 | 02 May 2018 |
| | | | | JP | 2020500467 | A | 09 January 2020 |
| CN | 111869156 | A | 30 October 2020 | WO | 2021253241 | A1 | 23 December 2021 |
| | | | | IN | 202247077301 | A | 06 January 2023 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210625704